(19) Europäisches Patentamt
European Patent Office
Office européen des brevets

(11) **EP 2 947 576 B1**

(12) **EUROPÄISCHE PATENTSCHRIFT**

(45) Veröffentlichungstag und Bekanntmachung des Hinweises auf die Patenterteilung:
**05.07.2017 Patentblatt 2017/27**

(51) Int Cl.:
***G06F 13/42*** *(2006.01)*     ***G06F 13/28*** *(2006.01)*

(21) Anmeldenummer: **15168727.4**

(22) Anmeldetag: **21.05.2015**

(54) **ÜBERTRAGEN DER ZEICHEN EINER ZEICHENKETTE AUS EINEM ERSTEN ELEKTRONISCHEN MODUL IN EIN ZWEITES ELEKTRONISCHES MODUL**

TRANSMISSION OF THE CHARACTERS OF A STRING OF CHARACTERS FROM A FIRST ELECTRONICAL MODULE TO A SECOND ELECTRONICAL MODULE

TRANSFERT DE SIGNE D'UNE CHAÎNE DE SIGNES À PARTIR D'UN PREMIER MODULE ÉLECTRONIQUE DANS UN SECOND MODULE ÉLECTRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2014 DE 102014209625**

(43) Veröffentlichungstag der Anmeldung:
**25.11.2015 Patentblatt 2015/48**

(73) Patentinhaber: **Preh Car Connect GmbH**
**01156 Dresden (DE)**

(72) Erfinder: **Hubert, M.Sc. Ralf**
**01705 Freital (DE)**

(56) Entgegenhaltungen:
**US-A1- 2011 225 339     US-A1- 2012 089 754**
**US-A1- 2014 115 222**

EP 2 947 576 B1

**Beschreibung**

Die Erfindung betrifft ein Verfahren zum Übertragen der Zeichen einer Zeichenkette aus einem ersten elektronischen Modul in ein zweites elektronisches Modul und eine Schaltungsanordnung zum Ausführen des Verfahrens.

Die Geschwindigkeit, mit der digitale Daten aus einem Flash-EEPROM (Flash Electrically Erasable Programmable Read-Only Memory) ausgelesen werden können, spielt beispielsweise beim Booten eines eingebetteten Systems (engl. embedded system) eine Rolle. Der Begriff "eingebettetes System" bezeichnet einen elektronischen Rechner oder einen Computer, der in ein anderes technisches System eingebunden beziehungsweise eingebettet ist. Bei dem anderen technischen System handelt es sich beispielsweise um ein Haushaltsgerät, ein Gerät der Unterhaltungselektronik, ein medizinisches Gerät, ein Kraftfahrzeug, ein Gerät der Kommunikationstechnik oder ein Navigationsgerät.

Der Bootvorgang läuft in mehreren Stufen ab. Nach dem Einschalten des eingebetteten Systems lädt dessen Hauptprozessor (engl. CPU - Central Processing Unit) zunächst ein einfaches Startprogramm (engl. Bootloader) aus seinem Festwertspeicher (engl. ROM - Read-Only Memory) in seinen Arbeitsspeicher (engl. RAM - Random Access Memory). Das einfache Startprogramm erlaubt das Laden eines komplexeren Startprogramms aus dem Flash-EEPROM in den Arbeitsspeicher. Mit dem komplexeren Startprogramm lässt sich dann ein Betriebssystem aus dem Flash-EEPROM in den Arbeitsspeicher laden. Je schneller die Daten aus dem Flash-EEPROM ausgelesen werden, umso eher ist der Bootvorgang abgeschlossen und das Betriebssystem nutzbar.

Die Daten aus dem Flash-EEPROM werden oft über einen Datenbus zu dem Hauptprozessor übertragen, beispielsweise über einen SPI(Serial Peripheral Interface)-Datenbus. Dafür verfügen der Flash-EEPROM und der Hauptprozessor jeweils über eine SPI-Schnittstelle, die über mehrere Datenleitungen miteinander verbunden sind. Während der Hauptprozessor als Master arbeitet, welcher die Datenübertragung initiiert, wird der Flash-EEPROM als Slave betrieben, welcher die Daten auf Befehl des Hauptprozessors sendet.

Bei herkömmlichen SPI-Schnittstellen werden die Daten aus dem Flash-EEPROM über eine einzelne Datenleitung namens MISO (Master In Slave Out) in den Arbeitsspeicher des Hauptprozessors übertragen. Eine zweite Datenleitung namens MOSI (Master Out Slave In) ist für die Datenübertragung in der Gegenrichtung, das heißt vom Hauptprozessor zum Flash-EEPROM, reserviert und kann somit nicht für die Datenübertragung aus dem Flash-EEPROM in den Arbeitsspeicher des Hauptprozessors genutzt werden.

Um die Geschwindigkeit der Datenübertragung zu erhöhen, wurde die Methode des Speicherdirektzugriffs (engl. DMA - Direct Memory Access) entwickelt. Mit dem Speicherdirektzugriff lassen sich Speicherinhalte aus dem Flash-EEPROM direkt, das heißt ohne Umweg über den Hauptprozessor, in dessen Arbeitsspeicher übertragen. Der Speicherdirektzugriff wird vom Hauptprozessor initiiert und von einer speziellen Speicherdirektzugriffs-Steuereinheit (engl. DMA controller) gesteuert. Der Vorteil des Speicherdirektzugriffs gegenüber dem herkömmlichen Speicherzugriff besteht in der schnelleren Datenübertragung in Verbindung mit einer Entlastung des Hauptprozessors.

Ferner wurden zum Erhöhen der Datenübertragungsgeschwindigkeit spezielle mehrfachlesefähige und mehrfachschreibfähige SPI-Schnittstellen entwickelt. Diese SPI-Schnittstellen erlauben eine Datenübertragung zwischen zwei SPI-Schnittstellen über mehrere Datenleitungen parallel, das heißt gleichzeitig in derselben Richtung. Typisch sind zweifachlesefähige/zweifachschreibfähige SPI-Schnittstellen, die eine Datenübertragung über zwei Datenleitungen parallel erlauben, und vierfachlesefähige/vierfachschreibfähige SPI-Schnittstellen, die eine Datenübertragung über vier Datenleitungen parallel erlauben.

Um auf zusätzliche Anschlüsse verzichten zu können, verwendet manche zweifachlesefähige SPI-Schnittstelle neben ihrem MISO-Anschluss auch ihren MOSI-Anschluss zum Ausgeben von Daten. Dazu lässt sich die SPI-Schnittstelle in einen speziellen Zweifachlese-Betriebsmodus (engl. dual read mode) umschalten.

Aus dem gleichen Grund verwendet manche zweifachschreibfähige SPI-Schnittstelle neben ihrem MOSI-Anschluss auch ihren MISO-Anschluss zum Empfangen von Daten. Dazu lässt sich die SPI-Schnittstelle in einen speziellen Zweifachschreib-Betriebsmodus (engl. dual write mode) umschalten.

Bei der geschilderten Datenübertragung zwischen zwei SPI-Schnittstellen über mehrere Datenleitungen parallel muss die sendeseitige SPI-Schnittstelle mehrfachlesefähig sein und die empfangsseitige SPI-Schnittstelle muss mehrfachschreibfähig sein. Ist dagegen lediglich die sendeseitige SPI-Schnittstelle mehrfachlesefähig, während die empfangsseitige SPI-Schnittstelle nicht mehrfachschreibfähig ist, muss die Datenübertragung bisher auf konventionelle Art erfolgen, das heißt über die MISO-Datenleitung allein oder über die MOSI-Datenleitung allein. Dadurch wird keine so hohe Datenübertragungsgeschwindigkeit erreicht, wie bei einer Datenübertragung über mehrere Datenleitungen parallel.

Daraus ergibt sich die Aufgabe der vorliegenden Erfindung, die Geschwindigkeit der Übertragung digitaler Daten aus einem ersten elektronischen Modul, das eine mehrfachlesefähige SPI-Schnittstelle aufweist, über einen SPI-Datenbus in ein zweites elektronisches Moduls, das keine mehrfachschreibfähige SPI-Schnittstelle aufweist, zu erhöhen.

Die Aufgabe wird mit dem erfindungsgemäßen Verfahren zum Übertragen der Zeichen einer ersten Zeichenkette, in der die Zeichen in einer ersten Reihenfolge aneinandergereiht sind, aus einem ersten elektronischen Modul mit einer ersten Speichereinheit und einer mehrfachlesefähigen SPI-Schnittstelle in ein zweites elektronisches Modul mit einer zweiten Speichereinheit, mehreren SPI-Schnittstellen und einer Speicherdirektzugriffs-Steuereinheit, gelöst.

Das Verfahren weist folgende Schritte auf:

1) Erzeugen einer zweiten Zeichenkette, in der die Zeichen in einer zweiten Reihenfolge aneinandergereiht sind, aus der ersten Zeichenkette und Speichern der zweiten Zeichenkette in der ersten Speichereinheit,

2) Übertragen der Zeichen aus der ersten Speichereinheit über die SPI-Schnittstelle des ersten elektronischen Moduls in die SPI-Schnittstellen des zweiten elektronischen Moduls, wobei die Zeichen in mehrere Teilzeichenketten aufgeteilt werden, von denen jede in eine andere der SPI-Schnittstellen des zweiten elektronischen Moduls übertragen wird, und

3) Übertragen der Zeichen aus den SPI-Schnittstellen des zweiten elektronischen Moduls in die zweite Speichereinheit unter Verwendung der Speicherdirektzugriffs-Steuereinheit, sodass die Zeichen in der zweiten Speichereinheit gespeichert werden.

Die zweite Reihenfolge ist derart gestaltet, dass die Zeichen beim Speichern in der zweiten Speichereinheit in der ersten Reihenfolge aneinandergereiht werden, sodass die erste Zeichenkette wiederhergestellt wird.

Weil die SPI-Schnittstelle des ersten elektronischen Moduls mehrfachlesefähig ist, verfügt diese SPI-Schnittstelle über mehrere Ausgänge, die zum Senden von Daten an das zweite elektronische Modul verwendbar sind.

Da außerdem das zweite elektronische Modul mehrere SPI-Schnittstellen aufweist, kann jedem der Ausgänge der SPI-Schnittstelle des ersten elektronischen Moduls empfangsseitig ein anderer Eingang zugeordnet werden. Dadurch lassen sich die Zeichen von dem ersten elektronischen Modul zu dem zweiten elektronischen Modul über mehrere Datenleitungen parallel übertragen, was im Vergleich zum Übertragen über nur eine Datenleitung eine höhere Übertragungsgeschwindigkeit erlaubt.

Bei dem Übertragungsschritt 2) werden die Zeichen in mehrere Teilzeichenketten (kurz: TZK) aufgeteilt, die jeweils an eine andere SPI-Schnittstelle des zweiten elektronischen Moduls übertragen werden.

Ferner werden bei dem Übertragungsschritt 3) die Teilzeichenketten aus den SPI-Schnittstellen des zweiten elektronischen Moduls in die zweite Speichereinheit übertragen. Hierfür setzt man die Speicherdirektzugriffs-Steuereinheit ein, weshalb dieser Übertragungsschritt auch als "DMA-Transfer" bezeichnet wird.

Allerdings werden die Zeichen beim Übertragen verfahrensbedingt untereinander vertauscht, mit anderen Worten "verwürfelt" (engl. interleaved). Das führt dazu, dass die Zeichen in der zweiten Speichereinheit in einer anderen Reihenfolge als in der ersten Speichereinheit gespeichert werden.

Die Besonderheit des Verfahrens besteht nun darin, dass die Zeichen vor der Übertragung nicht in ihrer ursprünglichen Reihenfolge, sondern in einer anderen (zweiten) Reihenfolge in der ersten Speichereinheit gespeichert werden. Die zweite Reihenfolge ist derart gestaltet, dass die Zeichen beim späteren Speichern in der zweiten Speichereinheit in der ersten Reihenfolge, also in Form der ursprünglichen Zeichenkette, aneinandergereiht werden.

Zusammenfassend wird durch das Verfahren die Geschwindigkeit erhöht, mit der die Zeichen einer Zeichenkette aus einem ersten elektronischen Modul, das eine mehrfachlesefähige SPI-Schnittstelle aufweist, über einen SPI-Datenbus in ein zweites elektronisches Modul übertragen werden, das keine mehrfachschreibfähige SPI-Schnittstelle aufweist.

Insbesondere erlaubt das Verfahren eine Vervielfachung der Geschwindigkeit der Datenübertragung aus einem Flash-EEPROM, welcher mit einer mehrfachlesefähigen SPI-Schnittstelle ausgestattet ist, über einen SPI-Datenbus in den Arbeitsspeicher eines integrierten Hautprozessorschaltkreises, der keine mehrfachschreibfähige SPI-Schnittstelle aufweist. Diese Vervielfachung wird im Wesentlichen durch die Verwendung von einer oder mehreren zusätzlichen SPI-Schnittstellen des Hautprozessorschaltkreises erreicht. Wird beispielsweise eine zusätzliche SPI-Schnittstelle verwendet, kann sich die Datenrate verdoppeln. Werden drei zusätzliche SPI-Schnittstellen verwendet, kann sich die Datenrate sogar vervierfachen.

Die oben genannte Aufgabe wird außerdem mit einer Schaltungsanordnung gemäß der Erfindung gelöst. Die Schaltungsanordnung ist zum Übertragen der Zeichen einer ersten Zeichenkette, in der die Zeichen in einer ersten Reihenfolge aneinandergereiht sind eingerichtet und weist ein erstes elektronisches Modul mit einer ersten Speichereinheit und einer mehrfachlesefähigen SPI-Schnittstelle und ein zweites elektronisches Modul mit einer zweiten Speichereinheit, mehreren SPI-Schnittstellen und einer Speicherdirektzugriffs-Steuereinheit auf.

Die erste Speichereinheit ist zum Speichern einer zweiten Zeichenkette, in der die Zeichen in einer zweiten Reihenfolge aneinandergereiht sind, eingerichtet.

Die SPI-Schnittstelle des ersten elektronischen Moduls ist zum Übertragen der Zeichen aus der ersten Speichereinheit in die SPI-Schnittstellen des zweiten elektronischen Moduls, wobei die Zeichen in mehrere Teilzeichenketten aufgeteilt werden, von denen jede in eine andere der SPI-Schnittstellen des zweiten elektronischen Moduls übertragen wird, eingerichtet.

Die Speicherdirektzugriffs-Steuereinheit ist zum Übertragen der Zeichen aus den SPI-Schnittstellen des zweiten elektronischen Moduls in die zweite Speichereinheit, sodass die Zeichen in der zweiten Speichereinheit gespeichert werden, eingerichtet.

Beim Speichern in der zweiten Speichereinheit werden die Zeichen in der ersten Reihenfolge aneinandergereiht, sodass die erste Zeichenkette gebildet wird.

Weitere Ausführungsbeispiele der Erfindung sind in den abhängigen Patentansprüchen beschrieben.

Die Erfindung wird nun Bezug nehmend auf die folgenden Figuren näher erläutert:

Figur 1 zeigt ein Ausführungsbeispiel der erfindungsgemäßen Schaltungsanordnung in Form eines Blockschemas.

Figur 2 zeigt die SPI-Schnittstellen der Schaltungsanordnung aus Figur 1 in Form eines Blockschemas.

Figur 3 zeigt das zweite elektronische Modul der Schaltungsanordnung aus Figur 1 in Form eines Blockschemas.

Figur 4 zeigt eine Schaltungsanordnung zum Speichern einer Zeichenkette im ersten elektronischen Modul der Schaltungsanordnung aus Figur 1 in Form eines Blockschemas.

Figur 5 zeigt die SPI-Schnittstellen der Schaltungsanordnung aus Figur 4 in Form eines Blockschemas.

Figur 6 zeigt das weitere elektronische Modul der Schaltungsanordnung aus Figur 4 in Form eines Blockschemas.

Figur 7 zeigt ein Ausführungsbeispiel des erfindungsgemäßen Verfahrens in Form eines Ablaufschemas.

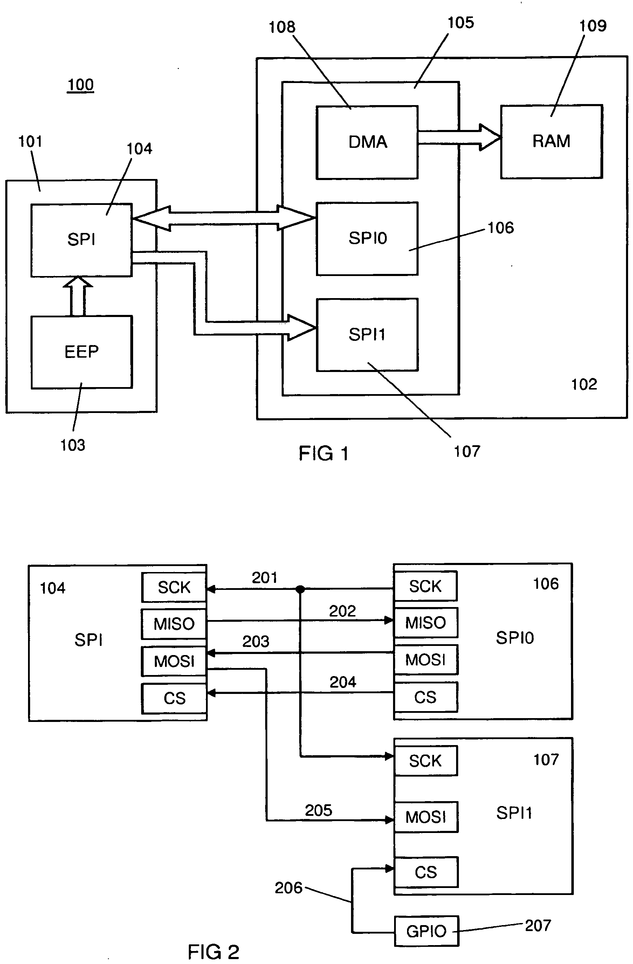

Im Folgenden wird die Erfindung Bezug nehmend auf **Figur 1** näher erläutert, welche ein Ausführungsbeispiel der erfindungsgemäßen Schaltungsanordnung 100 in Form eines Blockschemas zeigt.

Die Schaltungsanordnung 100 gehört zu einem eingebetteten System, das in ein anderes technisches System eingebunden ist, bei dem es sich beispielsweise ein Haushaltsgerät, ein Gerät der Unterhaltungselektronik, ein medizinisches Gerät, ein Kraftfahrzeug, ein Gerät der Kommunikationstechnik, ein Navigationsgerät oder ein Radionavigationssystem handelt.

Alternativ dazu kann die Schaltungsanordnung 100 zu einem Computersystem gehören.

Die Schaltungsanordnung 100 weist zwei elektronische Module 101, 102 auf. Bei dem ersten elektronischen Modul 101 handelt es sich um einen integrierten Flash-Speicherschaltkreis, welcher über eine SPI-Schnittstelle 104 (Bezeichnung: "SPI") und eine Speichereinheit 103 in Form eines Flash-EEPROMs (Bezeichnung: "EEP") verfügt.

Die SPI-Schnittstelle 104 lässt sich in einem Einfachlese/Einfachschreib-Betriebsmodus betreiben, in welchem die SPI-Schnittstelle 104 auf einer Datenleitung Daten ausgeben und auf einer anderen Datenleitung Daten empfangen kann. Mit anderen Worten ist die SPI-Schnittstelle 104 in diesem Betriebsmodus einfachlesefähig und einfachschreibfähig.

Zusätzlich lässt sich die SPI-Schnittstelle 104 in einem Zweifachlese-Betriebsmodus betreiben, in welchem die SPI-Schnittstelle 104 auf zwei Datenleitungen Daten ausgeben kann. In dem Zweifachlese-Betriebsmodus ist die SPI-Schnittstelle zweifachlesefähig.

Außerdem lässt sich die SPI-Schnittstelle 104 in einem Zweifachschreib-Betriebsmodus betreiben, in welchem die SPI-Schnittstelle 104 auf zwei Datenleitungen Daten empfangen kann. In dem Zweifachschreib-Betriebsmodus ist die SPI-Schnittstelle zweifachschreibfähig.

Anstelle des Flash-EEPROMs kann das elektronische Modul 101 auch eine andere Art von Speichereinheit aufweisen, beispielsweise einen ROM, einen EPROM oder einen MROM.

Das zweite elektronische Modul 102 weist einen integrierten Hauptprozessorschaltkreis 105 mit einem Hauptprozessor (nicht gezeigt), einer SPI-Schnittstelle 106 (Bezeichnung "SPIO"), einer SPI-Schnittstelle 107 (Bezeichnung "SPI1") und einer Speicherdirektzugriffs-Steuereinheit 108 (Bezeichnung "DMA") auf.

Die SPI-Schnittstellen 106, 107 lassen sich im Gegensatz zur SPI-Schnittstelle 104 weder in einem Zweifachlese-Betriebsmodus noch in einem Zweifachschreib-Betriebsmodus betreiben, sondern lediglich in einem Einfachlese/Einfachschreib-Betriebsmodus. Das heißt, keine der SPI-Schnittstellen 106, 107 ist mehrfachlesefähig oder mehrfachschreibfähig. Daher kann jede der SPI-Schnittstellen 106, 107 immer nur auf einer Datenleitung Daten empfangen oder ausgeben.

Die SPI-Schnittstelle 106 ist als Master eines SPI-Datenbusses konfiguriert, welcher die beiden elektronischen Module 101, 102 miteinander verbindet. Daher wird die SPI-Schnittstelle 106 auch als "Master-SPI-Schnittstelle" bezeichnet. Außerdem sind die SPI-Schnittstelle 104 und die SPI-Schnittstelle 107 jeweils als Slave des SPI-Datenbusses konfiguriert und werden daher auch als "Slave-SPI-Schnittstellen" bezeichnet.

Optional kann das zweite elektronische Modul auch noch weitere SPI-Schnittstellen aufweisen, beispielsweise insgesamt vier SPI-Schnittstellen.

Daneben weist das zweite elektronische Modul 102 eine Speichereinheit 109 (Bezeichnung: "RAM") auf, bei der es sich um eine SDRAM-Speicherbank mit mehreren integrierten SDRAM-Schaltkreisen handelt. Die SDRAM-Speicherbank ist mit dem Hauptprozessorschaltkreis 105 über eine DDR2/DDR3-Schnittstelle (nicht gezeigt) elektrisch verbunden, welche eine Vielzahl von Datenleitungen aufweist. Anstelle der SDRAM-Speicherbank kann das elektronische Modul 102 auch eine andere Art von Speichereinheit aufweisen, beispielsweise einen SRAM oder einen DRAM.

Zusätzlich zu den genannten Bestandteilen können das elektronische Modul 101 und das elektronische Modul 102 noch weitere Bestandteile aufweisen.

Die elektronischen Module 101,102 sind auf derselben Leiterplatte (nicht gezeigt) angeordnet. Alternativ dazu ist es jedoch auch möglich, dass die elektronischen Module 101, 102 auf unterschiedlichen Leiterplatten angeordnet sind.

Desweiteren zeigt Figur 1 mehrere Blockpfeile, die jeweils einen Datenstrom symbolisieren, der beim Übertragen einer Zeichenkette aus der Speichereinheit 103 in die Speichereinheit 109 auftritt.

Im Folgenden wird die Erfindung Bezug nehmend auf **Figur 2** näher erläutert, welche die SPI-Schnittstellen 104, 106, 107 der Schaltungsanordnung 100 aus Figur 1 in Form eines Blockschemas zeigt.

Jede der SPI-Schnittstellen 104, 106, 107 verfügt über einen Taktsignalanschluss (Bezeichnung "SCK"), einen MOSI-Anschluss (Bezeichnung "MOSI") und einen Chipauswahlanschluss (Bezeichnung "CS"). Zusätzlich verfügen die SPI-Schnittstellen 104, 106 jeweils über einen MISO-Anschluss (Bezeichnung "MISO"), während die SPI-Schnittstelle 107 keinen solchen Anschluss aufweist.

Optional kann auch die SPI-Schnittstelle 107 einen MISO-Anschluss besitzen. Dieser kann über eine elektrische Datenleitung mit dem MISO-Anschluss der ersten SPI-Schnittstelle 104 verbunden sein. Alternativ dazu kann die SPI-Schnittstelle 107 einen MOSI/MISO-Anschluss aufweisen, der sowohl als MOSI-Anschluss als auch als MISO-Anschluss betreibbar ist.

Neben den Anschlüssen der SPI-Schnittstellen 104, 106, 107 zeigt Figur 2 auch einen Allzweckeingabe/-ausgabe-Anschluss 207 (engl. GPIO - General Purpose Input/Output pin) des Hauptprozessorschaltkreises 105. Der Allzweckeingabe/-ausgabe-Anschluss 207 ist als Ausgang konfiguriert.

Desweiteren sind mehrere elektrische Datenleitungen 201 bis 206 als Pfeile dargestellt. Die Datenleitungen 201 bis 206 verbinden die SPI-Schnittstellen 104, 106, 107 untereinander und mit dem Allzweckeingabe/-ausgabe-Anschluss 207.

Im Einzelnen verbindet die Datenleitung 201 die Taktsignalanschlüsse (SCK) der drei SPI-Schnittstellen 104, 106, 107 miteinander. Auf dieser Datenleitung 201 kann die SPI-Schnittstelle 106 ein Taktsignal bereitstellen, welches die SPI-Schnittstelle 104 und die SPI-Schnittstelle 107 treibt. Auf diese Weise lassen sich die SPI-Schnittstelle 104 und die SPI-Schnittstelle 107 mit der SPI-Schnittstelle 106 synchronisieren.

Ferner verbindet eine Datenleitung 202 die MISO-Anschlüsse der SPI-Schnittstelle 104 und der SPI-Schnittstelle 106 miteinander. Über diese Datenleitung 202 lassen sich Daten von der SPI-Schnittstelle 104 zu der SPI-Schnittstelle 106 übertragen.

Weiterhin verbindet eine Datenleitung 203 den MOSI-Anschluss der SPI-Schnittstelle 104 mit dem MOSI-Anschluss der SPI-Schnittstelle 106. Über diese Datenleitung 203 lassen sich im Einfachlese/Einfachschreib-Betriebsmodus der SPI-Schnittstelle 104 Daten von der SPI-Schnittstelle 106 zu der SPI-Schnittstelle 104 übertragen.

Ferner verbindet eine Datenleitung 204 den Chipauswahlanschluss (CS) der SPI-Schnittstelle 104 mit dem Chipauswahlanschluss (CS) der SPI-Schnittstelle 106. Über diese Datenleitung 204 kann die SPI-Schnittstelle 106 die SPI-Schnittstelle 104 aktivieren, indem sie den Spannungspegel ihres Chipauswahlanschlusses (CS) auf ein niedriges Niveau (engl. low) absenkt. Die SPI-Schnittstelle 106 kann die SPI-Schnittstelle 104 über die Datenleitung 204 auch deaktivieren, indem sie den Spannungspegel ihres Chipauswahlanschlusses (CS) auf ein hohes Niveau (engl. high) erhöht.

Außerdem verbindet eine Datenleitung 205 den MOSI-Anschluss der SPI-Schnittstelle 104 mit dem MOSI-Anschluss der SPI-Schnittstelle 107. Über diese Datenleitung 205 lassen sich im Zweifachlese-Betriebsmodus der SPI-Schnittstelle 104 Daten von der SPI-Schnittstelle 104 zur SPI-Schnittstelle 107 übertragen. Dabei wird der MOSI-Anschluss der SPI-Schnittstelle 104 entgegen seiner ursprünglichen Bestimmung als Ausgang betrieben, wobei der MOSI-Anschluss der SPI-Schnittstelle 106 hochohmig ist.

Weiterhin verbindet eine Datenleitung 206 den Chipauswahlanschluss (CS) der SPI-Schnittstelle 107 mit dem Allzweckeingabe/-ausgabe-Anschluss 207. Über diese Datenleitung 206 kann der Hauptprozessor die SPI-Schnittstelle 107 aktivieren oder deaktivieren, indem er den Spannungspegel des Allzweckeingabe/-ausgabe-Anschlusses 207 auf das niedrige Niveau absenkt beziehungsweise auf das hohe Niveau erhöht.

Im Folgenden wird ein Ausführungsbeispiel des erfindungsgemäßen Verfahrens näher erläutert, bei welchem folgende Zeichenkette in die Speichereinheit 109 (vgl. Figur 1) übertragen werden soll:

A7 A6 A5 A4 A3 A2 A1 A0 B7 B6 B5 B4 B3 B2 B1 B0 C7 C6 C5 C4 C3 C2 C1 C0 D7 D6 D5 D4 D3 D2 D1 D0

Diese Zeichenkette wird im Folgenden "ursprüngliche Zeichenkette" oder "erste Zeichenkette" genannt. Die Bezeichnungen A7 bis D0 repräsentieren jeweils ein Zeichen. Folglich besteht die erste Zeichenkette aus insgesamt 32 Zeichen. Die Reihenfolge, in welcher die Zeichen der ersten Zeichenkette aneinandergereiht sind, wird als "ursprüngliche Reihenfolge" oder "erste Reihenfolge" bezeichnet.

Die erste Zeichenkette ist aus 4 aneinandergereihten Teilzeichenketten zusammengesetzt, die jeweils 8 Zeichen aufweisen. Die erste Teilzeichenkette besteht aus den Zeichen A7 bis A0, die zweite Teilzeichenkette besteht aus den Zeichen B7 bis B0, die dritte Teilzeichenkette besteht aus den Zeichen C7 bis C0 und die vierte Teilzeichenkette besteht aus den Zeichen D7 bis D0.

Im vorliegenden Fall handelt es sich bei jedem der Zeichen um ein Bit, sodass die genannten Teilzeichenketten jeweils 8 Bit (1 Byte) aufweisen. Damit entspricht die Länge einer der Teilzeichenketten der Länge eines Datenworts, welche ebenfalls 1 Byte beträgt.

Alternativ dazu ist es aber auch möglich, dass jedes der Zeichen aus mehreren Bits zusammengesetzt ist.

Ferner ist es möglich, dass die erste Zeichenkette eine andere Anzahl von Zeichen aufweist, beispielsweise 128 Zeichen beziehungsweise 16 Byte, wobei die Zeichenkette aus 4 Teilzeichenketten von jeweils 32 Zeichen beziehungsweise 4 Byte besteht. Auch in diesem Fall entspricht die Länge einer der Teilzeichenketten der Länge eines Datenworts, welche hier folglich 4 Byte beträgt.

Es wird nun erneut auf Figur 1 Bezug genommen.

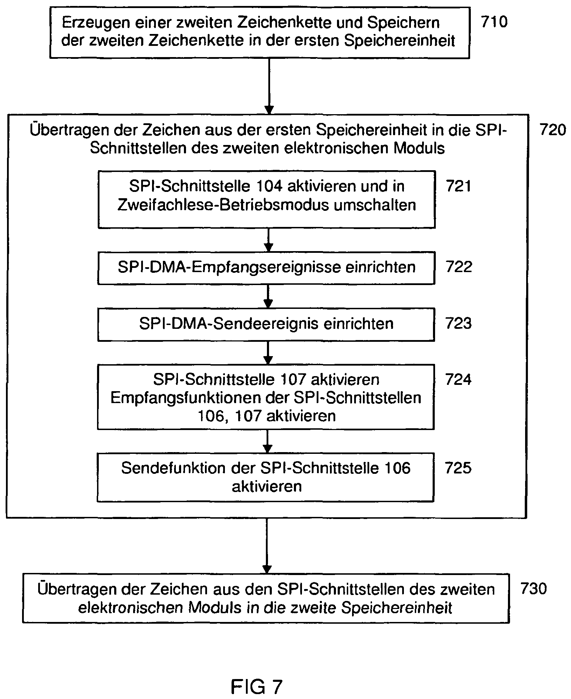

Bei einem ersten Verfahrensschritt 710 (vgl. Figur 7) wird aus der ersten Zeichenkette folgende zweite Zeichenkette erzeugt, in der die Zeichen in einer zweiten Reihenfolge aneinandergereiht sind:

A7 B7 A6 B6 A5 B5 A4 B4 A3 B3 A2 B2 A1 B1 A0 B0 C7 D7 C6 D6 C5 D5 C4 D4 C3 D3 C2 D2 C1 D1 C0 D0

Auch die zweite Zeichenkette ist aus 4 aneinandergereihten Teilzeichenketten zusammengesetzt, die jeweils 8 Zeichen aufweisen. Die erste Teilzeichenkette besteht aus den Zeichen A7 bis B4, die zweite Teilzeichenkette besteht aus den Zeichen A3 bis B0, die dritte Teilzeichenkette besteht aus den Zeichen C7 bis D4 und die vierte Teilzeichenkette besteht aus den Zeichen C3 bis D0.

Die zweite Reihenfolge ist außerdem derart gestaltet, dass die Zeichen bei ihrer späteren Übertragung in die Speichereinheit 109 wieder in ihrer ursprünglichen Reihenfolge aneinandergereiht werden. Auf diese Weise wird die ursprüngliche Zeichenkette wiederhergestellt.

Die Gestaltung der zweiten Reihenfolge beruht auf der Kenntnis der Vertauschungsvorgänge, die bei der Übertragung stattfinden. Diese Kenntnis erlaubt es, die zweite Zeichenkette automatisch aus der ersten Zeichenkette zu generieren, beispielsweise unter Verwendung einer separaten Recheneinheit.

Ferner wird bei dem ersten Verfahrensschritt die zweite Zeichenkette in der ersten Speichereinheit 103 gespeichert. Das erfolgt typischerweise bei der Herstellung des eingebetteten Systems, also vor dem Beginn seines bestimmungsgemäßen Gebrauchs. Zu diesem Zeitpunkt ist das elektronische Modul 101 bereits fest auf der Leiterplatte montiert, sodass der Speichervorgang mittels In-System-Programmierung ausführbar ist.

Alternativ dazu ist es aber auch möglich, dass das elektronische Modul 101 bei dem Speichervorgang noch nicht auf der Leiterplatte montiert ist, sondern sich beispielsweise auf einem geeigneten Programmiersockel befindet.

Als eine weitere Alternative ist der Speichervorgang bei der Herstellung des elektronischen Moduls 101 oder bei einem Test des elektronischen Moduls 101 ausführbar.

Zum Speichern der zweiten Zeichenkette wird diese über den MOSI-Anschluss der SPI-Schnittstelle 104 (vgl. Figur 2) in die Speichereinheit 103 übertragen. Das geschieht unter Verwendung eines speziellen Programmiergeräts (Flasher), der einer als Master fungierende SPI-Schnittstelle aufweist. Die SPI-Schnittstelle 104 fungiert dabei als Slave-SPI-Schnittstelle.

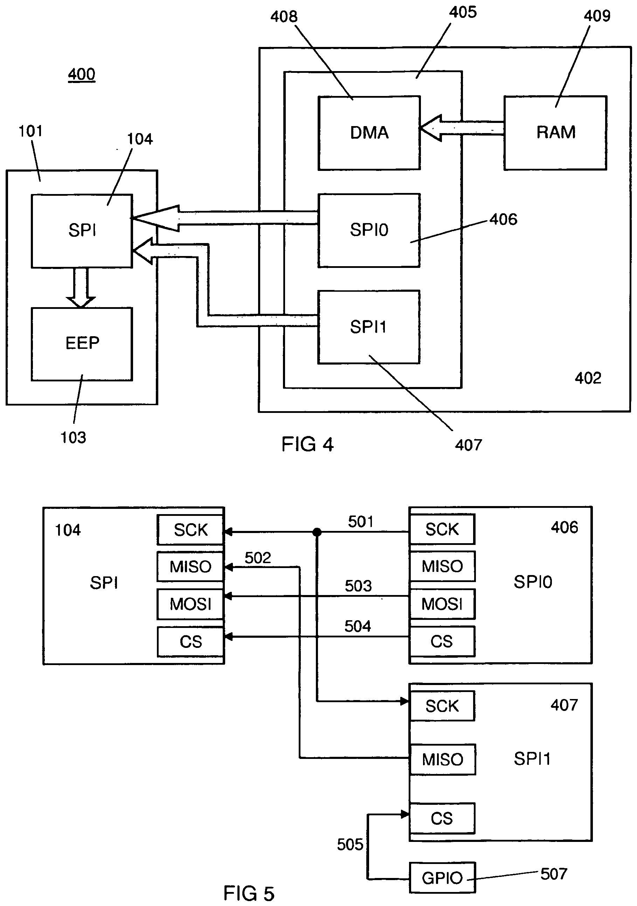

Alternativ dazu kann die zweite Zeichenkette über mehrere Datenleitungen parallel in die Speichereinheit 103 übertragen werden. Wie das funktioniert, ist unten Bezug nehmend auf die Figuren 4 bis 6 beispielhaft beschrieben.

Die folgenden Verfahrensschritte werden typischerweise beim bestimmungsgemäßen Gebrauch des eingebetteten Systems, also nach seiner Fertigstellung, ausgeführt.

Bei einem zweiten Verfahrensschritt 720 (vgl. Figur 7) werden die Zeichen aus der Speichereinheit 103 über die SPI-Schnittstelle 104 in die SPI-Schnittstellen 106, 107 des elektronischen Moduls 102 übertragen. Das geschieht normalerweise beim Start des eingebetteten Systems, insbesondere beim Booten des eingebetteten Systems.

Es wird nun erneut auf Figur 2 Bezug genommen.

Bei einem ersten Teilschritt 721 (vgl. Figur 7) wird die SPI-Schnittstelle 104 aktiviert, indem die SPI-Schnittstelle 106 den Spannungspegel ihres Chipauswahlanschlusses (CS) auf das /niedrige Niveau reduziert. Dadurch wird über die Datenleitung 204 auch der Spannungspegel des Chipauswahlanschlusses (CS) der SPI-Schnittstelle 104 auf den niedrigen Spannungspegel abgesenkt.

Ferner wird die SPI-Schnittstelle 104 vom Einfachlese/Einfachschreib-Betriebsmodus in den Zweifachlese-Betriebsmodus umgeschaltet, indem ein Zweifachlese-Befehl und eine Speicheradresse von der SPI-Schnittstelle 106 über die Datenleitung 203 an die SPI-Schnittstelle 104 übertragen werden. Damit wird die Bereitschaft der SPI-Schnittstelle 104 zur Datenausgabe über zwei Datenleitungen parallel hergestellt.

In dem Zweifachlese-Betriebsmodus bewirkt ein über die Datenleitung 201 zu der SPI-Schnittstelle 104 übertragenes Taktsignal, dass die SPI-Schnittstelle 104 Daten auf den Datenleitungen 202, 205 ausgibt. Die Daten werden an demjenigen Speicherort der Speichereinheit 103 (vgl. Figur 1) ausgelesen, den die übertragene Speicheradresse bezeichnet.

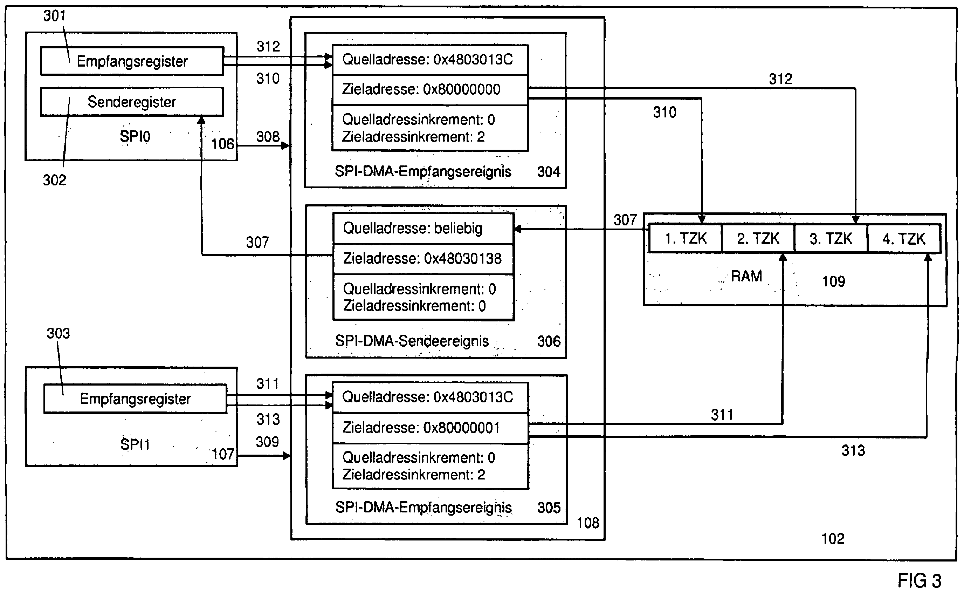

Es wird nun auf **Figur 3** Bezug genommen, welche das zweite elektronische Modul 102 der Schaltungsanordnung 100 aus Figur 1 in Form eines Blockschemas zeigt.

Die in Figur 3 dargestellte SPI-Schnittstelle 106 besitzt ein Empfangsregister 301 und ein Senderegister 302, während die SPI-Schnittstelle 107 lediglich ein Empfangsregister 303 besitzt. Optional kann aber auch die SPI-Schnittstelle 107 ein Senderegister aufweisen.

Daneben zeigt Figur 3 die Speicherdirektzugriffs-Steuereinheit 108 und die Speichereinheit 109. Außerdem sind mehrere Pfeile 307 bis 313 dargestellt, welche DMA-Transfers und Benachrichtigungssignale symbolisieren.

Bei einem zweiten Teilschritt 722 (vgl. Figur 7) wird in der Speicherdirektzugriffs-Steuereinheit 108 ein erstes SPI-DMA-Empfangsereignis (engl. SPI DMA event) 304 für die SPI-Schnittstelle 106 eingerichtet und ein zweites SPI-DMA-Empfangsereignis 305 wird für die SPI-Schnittstelle 107 eingerichtet. Die beiden SPI-DMA-Empfangsereignisse 304, 305 haben die Funktion, von den SPI-Schnittstellen 106, 107 empfangene Teilzeichenketten so in die Speichereinheit 109 zu übertragen, dass dort die ursprüngliche Zeichenkette zusammengesetzt wird.

Die beiden SPI-DMA-Empfangsereignisse 304, 305 sollen jeweils dann ausgeführt werden, wenn von der jeweiligen SPI-Schnittstelle 106, 107 eine Teilzeichenkette beziehungsweise eine entsprechende Anzahl von Zeichen empfangen wurde.

Jedes der beiden SPI-DMA-Empfangsereignisse 304, 305 ist durch die Parameter Quelladresse, Quelladressinkrement, Zieladresse, Zieladressinkrement und Übertragungslänge gekennzeichnet. Die Quelladresse bezeichnet den Speicherort im Empfangsregister 301, 303 der jeweiligen SPI-Schnittstelle 106, 107, an dem eine empfangene Teilzeichenkette ausgelesen werden soll. Das Quelladressinkrement bezeichnet die Anzahl der Zeichen, um welche die Quelladresse nach einem Auslesevorgang erhöht werden soll. Die Zieladresse bezeichnet den Speicherort in der zweiten Speichereinheit 109, an dem die empfangene Teilzeichenkette gespeichert werden soll. Das Zieladressinkrement bezeichnet die Anzahl der Zeichen, um welche die Zieladresse nach einem Speichervorgang erhöht werden soll. Die Übertragungslänge bezeichnet die Anzahl der Zeichen, welche aus dem Empfangsregister 301, 303 der jeweiligen SPI-Schnittstelle 106, 107 in die zweite Speichereinheit 109 übertragen werden sollen.

Im vorliegenden Fall lauten die Quelladressen der beiden SPI-DMA-Empfangsereignisse 304, 305 jeweils 0x4803013C und die Quelladressinkremente der beiden SPI-DMA-Empfangsereignisse 304, 305 lauten jeweils 0. Dadurch werden die empfangenen Teilzeichenketten immer am Anfang des jeweiligen Empfangsregisters 301, 303 ausgelesen.

Ferner lautet die Zieladresse des SPI-DMA-Empfangsereignisses 304 zunächst 0x80000000 und die Zieladresse des SPI-DMA-Empfangsereignisses 305 lautet zunächst 0x800000001. Damit ist die Zieladresse des SPI-DMA-Empfangsereignisses 305 eine Teilzeichenkettenlänge (8 Zeichen) beziehungsweise ein Byte größer als die Zieladresse des SPI-DMA-Empfangsereignisses 304. Das bewirkt, dass eine aus dem Empfangsregister 301 der SPI-Schnittstelle 106 ausgelesene Teilzeichenkette und eine parallel dazu aus dem Empfangsregister 303 der SPI-Schnittstelle 107 ausgelesene Teilzeichenkette in der Speichereinheit 109 unmittelbar hintereinander gespeichert werden.

Weiterhin entsprechen die Zieladressinkremente der beiden SPI-DMA-Empfangsereignisse 304, 305 jeweils einer doppelten Teilzeichenkettenlänge, also 16 Zeichen (2 Byte).

Die jeweilige Übertragungslänge der beiden SPI-DMA-Empfangsereignisse 304, 305 lässt sich mit folgender Formel berechnen:

$$\text{Übertragungslänge [Zeichen]} = \frac{\text{Länge der zu übertragenden Zeichenkette [Zeichen]}}{\text{TZK-Länge [Zeichen] * Anzahl empfangsseitiger SPI-Schnittstellen}}$$

$$= \frac{32}{8 * 2} = 16$$

(TZK...Teilzeichenkette)

Somit beträgt die Übertragungslänge der beiden SPI-DMA-Empfangsereignisse 304, 305 jeweils 16 Zeichen (2 Byte). Das bewirkt, dass der Übertragungsvorgang beendet wird, nachdem aus jedem der Empfangsregister 301, 303 zwei Teilzeichenketten in die zweite Speichereinheit 109 übertragen wurden.

Zusammenfassend werden die beiden SPI-DMA-Empfangsereignisse 304, 305 derart eingerichtet, dass nach dem Empfang zweier Teilzeichenketten diese direkt hintereinander in der Speichereinheit 109 gespeichert werden, wonach die Zieladressen um jeweils 2 Byte erhöht werden. Dadurch fügen die SPI-DMA-Empfangsereignisse die Teilzeichenketten in der richtigen Reihenfolge zusammen - nämlich entsprechend der ersten Zeichenkette.

Bei einem dritten Teilschritt 723 (vgl. Figur 7) wird in der Speicherdirektzugriffs-Steuereinheit 108 ein SPI-DMA-Sendeereignis 306 für die SPI-Schnittstelle 106 eingerichtet und der MOSI-Anschluss der SPI-Schnittstelle 106 (vgl. Figur 2) wird in einen hochohmigen Zustand gebracht.

Das SPI-DMA-Sendeereignis 306 hat die Funktion, irgendwelche beliebigen Zeichen in das Senderegister 302 zu schreiben, sodass am Taktsignalausgang (SCK) der SPI-Schnittstelle 106 (vgl. Figur 2) ein Taktsignal bereitgestellt wird, welches die Datenübertragung von der SPI-Schnittstelle 104 (vgl. Figur 2) zu den SPI-Schnittstellen 106, 107 treibt. Da es sich um beliebige Zeichen handelt, welche weder von der SPI-Schnittstelle 104 noch von der SPI-Schnittstelle 107 empfangen werden, wird die Übertragung der Zeichen in das Senderegister 302 als "Dummy-DMA-Transfer" bezeichnet.

Das SPI-DMA-Sendeereignis 306 ist durch die Parameter Quelladresse, Zieladresse, Quelladressinkrement, Zieladressinkrement und Übertragungslänge gekennzeichnet. Die Quelladresse bezeichnet den Speicherort in der Speichereinheit 109, an dem die auszugebenden Zeichen ausgelesen werden sollen. Das Quelladressinkrement bezeichnet die Anzahl der Zeichen, um welche die Quelladresse nach dem Auslesen einer Teilzeichenkette erhöht werden soll. Die Zieladresse bezeichnet den Speicherort im Senderegister 302, an dem die auszugebenden Zeichen gespeichert werden sollen. Das Zieladressinkrement bezeichnet die Anzahl der Zeichen, um welche die Zieladresse nach dem Speichern einer Teilzeichenkette im Senderegister 303 erhöht werden soll. Die Übertragungslänge bezeichnet die Anzahl der Zeichen, welche aus der zweiten Speichereinheit 109 in das Senderegister 303 übertragen werden sollen.

Im vorliegenden Fall wird die Quelladresse der zweiten Speichereinheit 109 beliebig gewählt und das Quelladressinkrement beträgt 0. Ferner lautet die Zieladresse des Senderegisters 303 0×48030138 und das Zieladressinkrement beträgt 0. Die gemäß obiger Formel berechnete Übertragungslänge beträgt 16 Zeichen (2 Byte).

Im Folgenden wird wieder auf Figur 2 Bezug genommen.

Bei einem vierten Teilschritt 724 (vgl. Figur 7) wird die SPI-Schnittstelle 107 aktiviert, indem der Spannungspegel des Allzweckeingabe/-ausgabe-Anschlusses 207 auf das niedrige Niveau abgesenkt wird. Dadurch wird über die Datenleitung 206 auch der Spannungspegel des Chipauswahlanschlusses (CS) der SPI-Schnittstelle 107 auf den niedrigen Spannungspegel abgesenkt.

Zusätzlich wird die Empfangsfunktion der SPI-Schnittstelle 106 aktiviert (engl. SPI0 RX DMA enable) und die Empfangsfunktion der SPI-Schnittstelle 107 wird ebenso aktiviert (engl. SPI1 RX DMA enable).

Im Folgenden wird wieder auf Figur 3 Bezug genommen.

Bei einem fünften Teilschritt 725 (vgl. Figur 7) wird die Sendefunktion der SPI-Schnittstelle 106 aktiviert (engl. SPI0 TX DMA enable). Damit wird das SPI-DMA-Sendeereignis 306 ausgelöst, sodass die Speicherdirektzugriffs-Steuereinheit 108 Zeichen aus der Speichereinheit 109 in das Senderegister 302 der SPI-Schnittstelle 106 überträgt, was als DMA-Transfer 307 bezeichnet wird.

Im Folgenden wird wieder auf Figur 2 Bezug genommen.

Sobald 8 Zeichen im Senderegister 302 (vgl. Figur 3) gespeichert sind, werden diese über den MOSI-Anschluss der SPI-Schnittstelle 106 ausgegeben. Das dabei vom Hauptprozessor erzeugte Taktsignal wird über die Datenleitung 201 sowohl an die SPI-Schnittstelle 104 als auch an die SPI-Schnittstelle 107 übertragen.

Mit dem empfangenen Taktsignal überträgt die SPI-Schnittstelle 104 einen Teil der Zeichen der zweiten Zeichenkette über die Datenleitung 202 zu der SPI-Schnittstelle 106. Parallel dazu überträgt die SPI-Schnittstelle 104 mit dem Taktsignal die anderen Zeichen der zweiten Zeichenkette über die Datenleitung 205 zu der SPI-Schnittstelle 107. Dabei wird der MOSI-Anschluss der ersten SPI-Schnittstelle 104 entgegen seiner ursprünglichen Bestimmung als Ausgang verwendet.

Zu bemerken ist, dass die Zeichen der zweiten Zeichenkette von der SPI-Schnittstelle 104 bitweise verwürfelt ausgegeben werden. Das heißt, dass zunächst das erste Zeichen (A7) auf der Datenleitung 202 ausgegeben wird, während gleichzeitig das zweite Zeichen (B7) auf der Datenleitung 205 ausgegeben wird. Dann wird das dritte Zeichen (A6) auf der Datenleitung 202 ausgegeben, während gleichzeitig das vierte Zeichen (B6) auf der Datenleitung 205 ausgegeben wird. Danach wird mit dem nächsten Zeichenpaar (A5, B5) genauso verfahren. Auf diese Weise wird die Übertragung fortgesetzt, bis alle 16 Zeichen der ersten beiden Teilzeichenketten der zweiten Zeichenkette in die SPI-Schnittstellen 106, 107 übertragen wurden.

Da die SPI-Schnittstelle 107 als Slave-SPI-Schnittstelle mit dem Taktsignalanschluss (SCK) der SPI-Schnittstelle 106 verbunden ist, werden hier die Zeichen synchron zur SPI-Schnittstelle 106 empfangen. Während der Übertragung füllen sich die Empfangsregister 301, 303 (vgl. Figur 3) schrittweise mit Zeichen.

Im Folgenden wird wieder auf Figur 3 Bezug genommen.

Der dritte Verfahrensschritt 730 (vgl. Figur 7) wird ausgeführt, sobald in den Empfangsregistern 301, 303 jeweils eine Teilzeichenkette beziehungsweise eine entsprechende Anzahl von Zeichen vorliegt. Dann werden die Zeichen aus den Empfangsregistern 301, 302 unter Verwendung der Speicherdirektzugriffs-Steuereinheit 108 in die Speichereinheit 109 übertragen, sodass die Zeichen dort gespeichert werden.

Zu bemerken ist, dass die im Empfangsregister 301 vorliegenden Zeichen die erste Teilzeichenkette der ursprünglichen Zeichenkette bilden, während die im Empfangsregister 303 vorliegenden Zeichen die zweite Teilzeichenkette der ursprünglichen Zeichenkette bilden. Das erlaubt das Zusammensetzen dieser beiden Teilzeichenketten entsprechend der ursprünglichen Zeichenkette bei den folgenden beiden DMA-Transfers 310, 311.

Zu diesem Zweck sendet die SPI-Schnittstelle 106 ein Benachrichtigungssignal 308 an die Speicherdirektzugriffs-Steuereinheit 108. Daraufhin führt die Speicherdirektzugriffs-Steuereinheit 108 einen DMA-Transfer 310 aus, bei dem sie den Inhalt des Empfangsregisters 301 in die Speichereinheit 109 überträgt und dort an der Zieladresse 0x80000000 ablegt. Dabei wird der Inhalt des Empfangsregisters 301 gelöscht, das heißt, das Empfangsregister 301 wird geleert. Anschließend erhöht die Speicherdirektzugriffs-Steuereinheit 108 die Zieladresse des SPI-DMA-Empfangsereignisses 304 um das Zieladressinkrement von 16 Zeichen (2 Byte), sodass die neue Zieladresse 0x800000002 lautet.

Ferner sendet die SPI-Schnittstelle 107 ein weiteres Benachrichtigungssignal 309 an die Speicherdirektzugriffs-Steuereinheit 108. Daraufhin führt die Speicherdirektzugriffs-Steuereinheit 108 einen weiteren DMA-Transfer 311 aus, bei dem sie den Inhalt des Empfangsregisters 303 in die zweite Speichereinheit 109 überträgt und dort an der Zieladresse 0x800000001 ablegt. Dabei wird das Empfangsregister 303 geleert. Anschließend erhöht die Speicherdirektzugriffs-Steuereinheit 108 die Zieladresse des SPI-DMA-Empfangsereignisses 305 um das Zieladressinkrement von 16 Zeichen (2 Byte), sodass die neue Zieladresse 0x800000003 lautet.

Zu bemerken ist, dass bei dem DMA-Transfer 311 der Inhalt des Empfangsregisters 303 aufgrund der Zieladressierung in der Speichereinheit 109 unmittelbar hinter dem Inhalt des Empfangsregisters 301 abgelegt wird, welcher bei dem vorhergehenden DMA-Transfer 310 in die Speichereinheit 109 übertragen wurde. Dadurch wird in der Speichereinheit 109 die erste Hälfte der ursprünglichen Zeichenkette zusammengesetzt.

Sobald im Empfangsregister 301 der SPI-Schnittstelle 106 und im Empfangsregister 303 der SPI-Schnittstelle 107 jeweils eine weitere Teilzeichenkette beziehungsweise eine entsprechende weitere Anzahl von Zeichen vorliegt, werden diese Zeichen aus den Empfangsregistern 301, 302 unter Verwendung der Speicherdirektzugriffs-Steuereinheit 108 in die Speichereinheit 109 übertragen, sodass die Zeichen dort gespeichert werden.

Zu bemerken ist, dass die im Empfangsregister 301 der SPI-Schnittstelle 106 vorliegenden weiteren Zeichen die dritte Teilzeichenkette der ursprünglichen Zeichenkette bilden, während die im Empfangsregister 303 der SPI-Schnittstelle 107 vorliegenden weiteren Zeichen die vierte Teilzeichenkette der ursprünglichen Zeichenkette bilden. Das ermöglicht das Zusammensetzen dieser Teilzeichenketten zur zweiten Hälfte der ursprünglichen Zeichenkette bei den folgenden beiden DMA-Transfers 312, 313.

Zu diesem Zweck sendet die SPI-Schnittstelle 106 erneut das Benachrichtigungssignal 308 an die Speicherdirektzugriffs-Steuereinheit 108. Daraufhin führt die Speicherdirektzugriffs-Steuereinheit 108 einen weiteren DMA-Transfer 312 aus, bei dem sie den Inhalt des Empfangsregisters 301 in die Speichereinheit 109 überträgt und dort an der neuen Zieladresse 0x800000002 speichert. Dabei wird das Empfangsregister 301 geleert. Anschließend erhöht die Speicherdirektzugriffs-Steuereinheit 108 die Zieladresse des SPI-DMA-Empfangsereignisses 304 um das Zieladressinkrement von 16 Zeichen (2 Byte), sodass die neue Zieladresse 0x800000004 lautet.

Zu bemerken ist, dass bei dem DMA-Transfer 312 der Inhalt des Empfangsregisters 301 aufgrund der Zieladressierung in der Speichereinheit 109 unmittelbar hinter dem Inhalt des Empfangsregisters 303 gespeichert wird, welcher bei dem vorhergehenden DMA-Transfer 311 in die Speichereinheit 109 übertragen wurde.

Parallel dazu sendet die SPI-Schnittstelle 107 erneut das Benachrichtigungssignal 309 an die Speicherdirektzugriffs-Steuereinheit 108. Daraufhin führt die Speicherdirektzugriffs-Steuereinheit 108 einen weiteren DMA-Transfer 313 aus, bei dem sie den Inhalt des Empfangsregisters 303 in die Speichereinheit 109 überträgt und dort an der neuen Zieladresse 0x800000008 speichert. Dabei wird das Empfangsregister 303 geleert. Anschließend erhöht die Speicherdirektzugriffs-Steuereinheit 108 die Zieladresse des SPI-DMA-Empfangsereignisses 305 um das Zieladressinkrement von 16 Zeichen (2 Byte), sodass die neue Zieladresse 0x800000005 lautet.

Zu bemerken ist, dass bei dem DMA-Transfer 313 der Inhalt des Empfangsregisters 303 aufgrund der Zieladressierung unmittelbar hinter dem Inhalt des Empfangsregisters 301 gespeichert wird, welcher bei dem vorhergehenden DMA-Transfer 312 in die Speichereinheit 109 übertragen wurde. Dadurch wird in der Speichereinheit 109 die ursprüngliche Zeichenkette vollständig zusammengesetzt

Damit ist das Übertragen der Zeichen der ersten Zeichenkette aus der Speichereinheit 103 (vgl. Figur 1) des elektronischen Moduls 101 (vgl. Figur 1) in die Speichereinheit 109 des elektronischen Moduls 102 beendet. In der Speichereinheit 109 ist nun die ursprüngliche Zeichenkette gespeichert.

Bei einem anderen Ausführungsbeispiel der Erfindung werden weitere Teilzeichenketten aus der Speichereinheit 103 (vgl. Figur 1) des elektronischen Moduls 101 (vgl. Figur 1) in die Speichereinheit 109 des elektronischen Moduls 102 übertragen. Dabei wird genauso vorgegangen, wie bei den vorgenannten Teilzeichenketten eins bis vier. Auf diese Weise kann beispielsweise das Abbild (engl. Image) eines Betriebssystems aus dem elektronischen Modul 101 in das elektronische Modul 102 übertragen werden, sodass das Betriebssystem unter Verwendung des elektronischen Moduls 102 ausgeführt werden kann.

Im Folgenden wird wieder auf Figur 2 Bezug genommen.

Anschließend wird die SPI-Schnittstelle 104 deaktiviert, indem die SPI-Schnittstelle 106 den Spannungspegel ihres Chipauswahlanschlusses (CS) auf das hohe Niveau erhöht. Das bewirkt auch ein Umschalten der SPI-Schnittstelle 104 vom Zweifachlese-Betriebmodus in den Einfachlese/Einfachschreib-Betriebsmodus. Zusätzlich wird die SPI-Schnittstelle 107 deaktiviert, indem der Hauptprozessor den Spannungspegel des Allzweckeingabe/-ausgabe-Anschlusses 207 auf das hohe Niveau erhöht.

Im Folgenden wird eine alternative Variante des oben erwähnten ersten Verfahrensschritts, bei dem die zweite Zeichenkette aus der ersten Zeichenkette erzeugt wird, und die zweite Zeichenkette in der Speichereinheit 103 (vgl. Figur 1) gespeichert wird, erläutert. Bei dieser Variante wird die zweite Zeichenkette über zwei Datenleitungen parallel in die Speichereinheit 103 übertragen, wobei die SPI-Schnittstelle 104 (vgl. Figur 1) in einem Zweifachschreib-Betriebsmodus betrieben wird.

Es wird nun auf **Figur 4** Bezug genommen, welche eine Schaltungsanordnung 400 zum Speichern der zweiten Zeichenkette in der Speichereinheit 103 zeigt.

Neben dem aus Figur 1 bekannten elektronischen Modul 101 weist die Schaltungsanordnung 400 ein weiteres elektronisches Modul 402 auf, welches zu einem Programmiergerät gehört, das zum Speichern der zweiten Zeichenkette in dem elektronischen Modul 101 bestimmt ist.

Das elektronische Modul 402 ist ähnlich aufgebaut wie das aus Figur 1 bekannte elektronische Modul 102. Es besitzt einen integrierten Hauptprozessorschaltkreis 405 mit einem Hauptprozessor (nicht gezeigt), zwei SPI-Schnittstellen 406, 407 (Bezeichnungen "SPI0", "SPI1") und einer Speicherdirektzugriffs-Steuereinheit 408 (Bezeichnung "DMA"). Somit entspricht die Anzahl der SPI-Schnittstellen des elektronischen Moduls 402 der Anzahl der SPI-Schnittstellen des elektronischen Moduls 102.

Zusätzlich verfügt das elektronische Modul 402 über eine Speichereinheit 409 (Bezeichnung "RAM"), in welcher die erste Zeichenkette gespeichert ist. Wie oben erwähnt, hat die erste Zeichenkette folgende Gestalt:

A7 A6 A5 A4 A3 A2 A1 A0   B7 B6 B5 B4 B3 B2 B1 B0   C7 C6 C5 C4 C3 C2 C1 C0   D7 D6 D5 D4 D3 D2 D1 D0

Die erste Zeichenkette ist aus 4 aneinandergereihten Teilzeichenketten zusammengesetzt, die jeweils 8 Zeichen aufweisen. Die erste Teilzeichenkette besteht aus den Zeichen A7 bis A0, die zweite Teilzeichenkette besteht aus den Zeichen B7 bis B0, die dritte Teilzeichenkette besteht aus den Zeichen C7 bis C0 und die vierte Teilzeichenkette besteht aus den Zeichen D7 bis D0.

Die Speichereinheit 409 ist als SDRAM-Speicherbank mit mehreren integrierten SDRAM-Schaltkreisen ausgebildet. Ferner ist die dritte Speichereinheit 409 mit dem Hauptprozessorschaltkreis 405 über eine DDR2/DDR3-Schnittstelle (nicht gezeigt) verbunden, welche eine Vielzahl von Datenleitungen aufweist.

Anstelle der SDRAM-Speicherbank kann das elektronische Modul 402 auch eine andere Art von Speichereinheit aufweisen, beispielsweise einen SRAM oder einen DRAM.

Die SPI-Schnittstelle 406 ist als Master eines SPI-Datenbusses konfiguriert, welcher die beiden elektronischen Module 101, 402 miteinander verbindet. Daher wird die SPI-Schnittstelle 406 auch als "Master-SPI-Schnittstelle" bezeichnet. Außerdem sind die SPI-Schnittstelle 104 und die SPI-Schnittstelle 407 als Slaves des SPI-Datenbusses konfiguriert und werden daher auch als "Slave-SPI-Schnittstellen" bezeichnet.

Zusätzlich kann das elektronische Modul 402 noch weitere Bestandteile aufweisen, welche in Figur 4 nicht gezeigt sind.

Desweiteren zeigt Figur 4 mehrere Blockpfeile, die jeweils einen Datenstrom symbolisieren, der beim Speichern der zweiten Zeichenkette in der ersten Speichereinheit 103 auftritt.

Es wird nun auf **Figur 5** Bezug genommen, welche die SPI-Schnittstellen 104, 406 und 407 der Schaltungsanordnung 400 in Form eines Blockschemas zeigt.

Genau wie die SPI-Schnittstelle 104 verfügen auch die SPI-Schnittstellen 406 und 407 jeweils über einen Taktsignalanschluss (Bezeichnung: "SCK"), einen MISO-Anschluss (Bezeichnung: "MISO") und einen Chipauswahlanschluss (Bezeichnung: "CS"). Zusätzlich verfügt neben der SPI-Schnittstelle 104 auch die SPI-Schnittstelle 406 über einen MOSI-Anschluss (Bezeichnung: "MOSI"), während die SPI-Schnittstelle 407 keinen solchen Anschluss aufweist.

Optional kann auch die SPI-Schnittstelle 407 einen MOSI-Anschluss besitzen, welcher über eine elektrische Datenleitung mit dem MOSI-Anschluss der SPI-Schnittstelle 104 verbunden sein kann. Alternativ dazu kann die SPI-Schnittstelle 407 einen MOSI/MISO-Anschluss aufweisen, der sowohl als MOSI-Anschluss als auch als MISO-Anschluss betreibbar ist.

Zusätzlich zeigt Figur 5 einen Allzweckeingabe/-ausgabe-Anschluss 507 des Hauptprozessorschaltkreises 405 (vgl. Figur 4), welcher mit "GPIO" bezeichnet ist und als Ausgang konfiguriert ist.

Desweiteren sind mehrere elektrische Datenleitungen 501 bis 505 als Pfeile dargestellt. Die Datenleitungen 501 bis 505 verbinden die SPI-Schnittstellen 104, 406, 407 untereinander und mit dem Allzweckeingabe-/-ausgabe-Anschluss 507.

Im Einzelnen verbindet die Datenleitung 501 die Taktsignalanschlüsse (SCK) der drei SPI-Schnittstellen 104, 406, 407 miteinander. Auf dieser Datenleitung 501 kann die SPI-Schnittstelle 406 ein Taktsignal bereitstellen, welches die SPI-Schnittstelle 104 und die SPI-Schnittstelle 407 treibt. Auf diese Weise lassen sich die SPI-Schnittstelle 104 und die SPI-Schnittstelle 407 mit der SPI-Schnittstelle 406 synchronisieren.

Ferner verbindet die Datenleitung 502 die MISO-Anschlüsse der SPI-Schnittstellen 104, 407 miteinander. Über diese Datenleitung 502 lassen sich Daten von der SPI-Schnittstelle 407 zu der SPI-Schnittstelle 104 übertragen, wenn die SPI-Schnittstelle 104 im Zweifachschreib-Betriebsmodus betrieben wird.

Weiterhin verbindet die Datenleitung 503 die MOSI-Anschlüsse der SPI-Schnittstellen 104, 406. Über diese Datenleitung 503 lassen sich Daten von der SPI-Schnittstelle 406 zu der SPI-Schnittstelle 104 übertragen.

Ferner verbindet die Datenleitung 504 die Chipauswahlanschlüsse (CS) der SPI-Schnittstellen 104, 406. Über diese Datenleitung 504 kann die SPI-Schnittstelle 406 die SPI-Schnittstelle 104 aktivieren, indem sie den Spannungspegel ihres Chipauswahlanschlusses (CS) auf das niedrige Niveau absenkt. Ferner kann die SPI-Schnittstelle 406 die SPI-Schnittstelle 104 über die Datenleitung 504 deaktivieren, indem sie den Spannungspegel ihres Chipauswahlanschlusses (CS) auf das hohe Niveau erhöht.

Weiterhin verbindet die Datenleitung 505 den Chipauswahlanschluss (CS) der SPI-Schnittstelle 407 mit dem Allzweckeingabe-/-ausgabe-Anschluss 507. Über diese Datenleitung 505 kann der Hauptprozessor die SPI-Schnittstelle 407 aktivieren oder deaktivieren, indem er den Spannungspegel des Allzweckeingabe-/-ausgabe-Anschlusses 507 auf das niedrige Niveau absenkt beziehungsweise auf das hohe Niveau erhöht.

Im Folgenden wird das Speichern der zweiten Zeichenkette in der Speichereinheit 103 (vgl. Figur 4) näher erläutert.

Zur Vorbereitung wird die SPI-Schnittstelle 104 aktiviert, indem die SPI-Schnittstelle 406 den Spannungspegel ihres Chipauswahlanschlusses (CS) auf das niedrige Niveau absenkt. Dadurch wird über die Datenleitung 504 auch der Spannungspegel des Chipauswahlanschlusses (CS) der ersten SPI-Schnittstelle 104 auf das niedrige Niveau abgesenkt.

Außerdem wird die SPI-Schnittstelle 104 vom Einfachlese/Einfachschreib-Betriebsmodus in den Zweifachschreib-Betriebsmodus umgeschaltet, indem ein Zweifachschreib-Befehl und eine Speicheradresse von der SPI-Schnittstelle 406 über die Datenleitung 503 an die erste SPI-Schnittstelle 104 übertragen werden. Die Speicheradresse repräsentiert den Speicherort in der Speichereinheit 103 (vgl. Figur 4), an dem die zweite Zeichenkette gespeichert werden soll. Damit wird die Bereitschaft der SPI-Schnittstelle 104 zum Empfangen von Daten über zwei Datenleitungen parallel hergestellt.

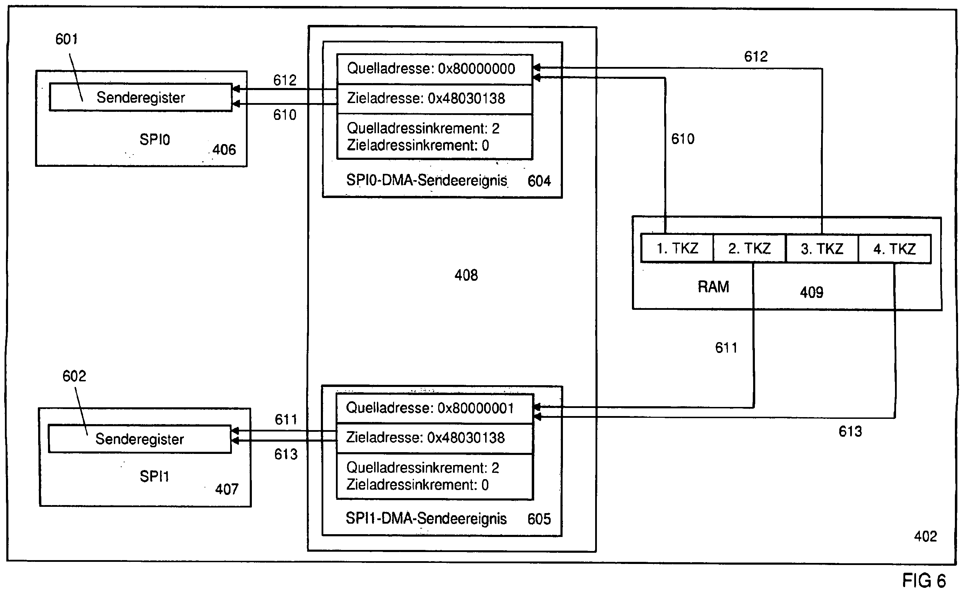

Es wird nun auf **Figur 6** Bezug genommen, welche das elektronische Modul 402 der Schaltungsanordnung 400 aus Figur 4 in Form eines Blockschemas zeigt.

Die SPI-Schnittstellen 406, 407 des elektronischen Moduls 402 besitzen jeweils ein Senderegister 601, 602. Optional kann eine der SPI-Schnittstellen 406, 407 ein zusätzliches Empfangsregister aufweisen oder beide SPI-Schnittstellen 406, 407 können jeweils ein zusätzliches Empfangsregister aufweisen.

Ferner zeigt Figur 6 die Speicherdirektzugriffs-Steuereinheit 408, die Speichereinheit 409 und eine Reihe von Pfeilen 610 bis 613, welche DMA-Transfers symbolisieren.

Bei einem ersten Teilschritt werden die Zeichen der ersten Zeichenkette unter Verwendung der Speicherdirektzugriffs-Steuereinheit 408 aus der Speichereinheit 409 in die SPI-Schnittstellen 406, 407 übertragen. Dabei werden die Zeichen in zwei Teilzeichenketten aufgeteilt, die jeweils in eine andere der SPI-Schnittstellen 406, 407 übertragen werden.

Dazu werden in der Speicherdirektzugriffs-Steuereinheit 408 ein SPI-DMA-Sendeereignis (engl. SPI0 TX DMA event) 604 für die SPI-Schnittstelle 406 und ein SPI-DMA-Sendeereignis (engl. SPI1TX DMA event) 605 für die SPI-Schnittstelle 407 eingerichtet. Die beiden SPI-DMA-Sendeereignisse 604, 605 haben die Funktion, die Zeichen der ersten Zeichenkette so in die Senderegister 601, 602 zu übertragen, dass beim weiteren Übertragen der Zeichen aus den Senderegistern 601, 602 in die Speichereinheit 103 (vgl. Figur 4) die zweite Zeichenkette zusammengesetzt wird.

Jedes der beiden SPI-DMA-Empfangsereignisse 604, 605 ist durch die Parameter Quelladresse, Quelladressinkrement, Zieladresse, Zieladressinkrement und Übertragungslänge gekennzeichnet.

Die Quelladresse bezeichnet den Speicherort in der Speichereinheit 409, an dem eine Teilzeichenkette ausgelesen werden soll. Das Quelladressinkrement bezeichnet die Anzahl der Zeichen, um welche die Quelladresse nach einem Auslesevorgang erhöht werden soll. Die Zieladresse bezeichnet den Speicherort im jeweiligen Senderegister 601, 602, an dem eine Teilzeichenkette vor ihrer weiteren Übertragung zwischengespeichert werden soll. Das Zieladressinkrement bezeichnet die Anzahl der Zeichen, um welche die Zieladresse nach dem Zwischenspeichern einer Teilzeichenkette erhöht werden soll. Die Übertragungslänge bezeichnet die Anzahl der Zeichen, welche aus der dritten Speichereinheit 409 in die jeweilige SPI-Schnittstelle 406, 407 übertragen werden sollen.

Im vorliegenden Fall lautet die Quelladresse des SPI-DMA-Sendeereignisses 604 zunächst 0x80000000 und die Quelladresse des SPI-DMA-Sendeereignisses 605 lautet zunächst 0x800000001. Ferner entsprechen die Quelladressinkremente der beiden SPI-DMA-Sendeereignisse 604, 605 jeweils einer doppelten Teilzeichenkettenlänge, also 16 Zeichen (2 Byte).

Weiterhin lauten die Zieladressen der beiden SPI-DMA-Sendeereignisse 604, 605 jeweils 0x48030138 und die Zieladressinkremente der beiden SPI-DMA-Empfangsereignisse 604, 605 betragen jeweils 0. Dadurch werden die aus der Speichereinheit 409 ausgelesenen Teilzeichenketten immer am Anfang des jeweiligen Senderegisters 301, 302 zwischengespeichert.

Die jeweilige Übertragungslänge der beiden SPI-DMA-Sendeereignisse 604, 605 lässt sich mit folgender Formel berechnen:

$$\text{Übertragungslänge [Zeichen]} = \frac{\text{Länge der zu übertragenden Zeichenkette [Zeichen]}}{\text{TZK-Länge [Zeichen] * Anzahl sendeseitiger SPI-Schnittstellen}}$$

$$= \frac{32}{8 * 2} = 16$$

(TZK...Teilzeichenkette)

Somit beträgt die Übertragungslänge der beiden SPI-DMA-Sendeereignisse 604, 605 jeweils 16 Zeichen (2 Byte). Das bewirkt, dass der Übertragungsvorgang beendet wird, nachdem in jedes der Senderegister 601, 602 zwei Teilzeichenketten aus der Speichereinheit 409 übertragen wurden.

Zusammenfassend werden die beiden SPI-DMA-Sendeereignisse 604, 605 derart eingerichtet, dass nach dem Auslesen zweier aufeinanderfolgender Teilzeichenketten aus der Speichereinheit 409 die Quelladressen um jeweils zwei Byte erhöht werden.

Ferner wird die SPI-Schnittstelle 407 aktiviert, indem der Spannungspegel des Allzweckeingabe-/-ausgabe-Anschlusses 507 (vgl. Figur 5) auf das niedrige Niveau abgesenkt wird.

Weiterhin wird die Sendefunktion der SPI-Schnittstelle 406 aktiviert (engl. SPI0 TX DMA enable) und die Sendefunktion der SPI-Schnittstelle 407 wird ebenfalls aktiviert (engl. SPI1 TX DMA enable). Dadurch werden das SPI-DMA-Sendeereignis 604 und das SPI-DMA-Sendeereignis 605 ausgelöst.

Das führt dazu, dass die Speicherdirektzugriffs-Steuereinheit 408 die erste Teilzeichenkette der ersten Zeichenkette aus der Speichereinheit 409 in das Senderegister 601 überträgt (DMA-Transfer 610). Anschließend erhöht die Speicherdirektzugriffs-Steuereinheit 408 die Quelladresse des SPI-DMA-Sendeereignisses 604 um das Quelladressinkrement von 16 Zeichen (2 Byte), sodass die neue Quelladresse 0x80000002 lautet.

Parallel dazu überträgt die Speicherdirektzugriffs-Steuereinheit 408 die zweite Teilzeichenkette der ersten Zeichenkette aus der Speichereinheit 409 in das Senderegister 602 (DMA-Transfer 611). Anschließend erhöht die Speicherdirektzugriffs-Steuereinheit 408 die Quelladresse des SPI-DMA-Sendeereignisses 605 um das Quelladressinkrement von 16 Zeichen (2 Byte), sodass die neue Quelladresse 0x80000003 lautet.

Sobald die erste Teilzeichenkette der zweiten Zeichenkette im Senderegister 601 gespeichert ist und die zweite Teilzeichenkette der zweiten Zeichenkette im Senderegister 602 gespeichert ist, wird ein zweiter Teilschritt ausgeführt, bei dem die beiden Teilzeichenketten aus den SPI-Schnittstellen 406, 407 in das elektronische Modul 101 (vgl. Figur 4) übertragen werden.

Es wird nun wieder auf Figur 5 Bezug genommen.

Bei dem zweiten Teilschritt wird die im Senderegister 601 (vgl. Figur 6) gespeicherte erste Teilzeichenkette über den MOSI-Anschluss der SPI-Schnittstelle 406 ausgegeben. Da die SPI-Schnittstelle 407 als Slave-SPI-Schnittstelle mit dem Taktsignalanschluss (CS) der SPI-Schnittstelle 406 verbunden ist, wird synchron dazu die im Senderegister 602 (vgl. Figur 6) gespeicherte zweite Teilzeichenkette über den MISO-Anschluss der SPI-Schnittstelle 407 ausgegeben. Dabei wird der Inhalt der Senderegister 601, 602 gelöscht.

Zu bemerken ist, dass die Zeichen der ersten Zeichenkette von den SPI-Schnittstellen 406, 407 bitweise verwürfelt ausgegeben werden. Das heißt, dass zunächst das erste Zeichen (A7) auf der Datenleitung 503 ausgegeben wird, während gleichzeitig das neunte Zeichen (B7) auf der Datenleitung 502 ausgegeben wird. Dann wird das zweite Zeichen (A6) auf der Datenleitung 503 ausgegeben, während gleichzeitig das zehnte Zeichen (B6) auf der Datenleitung 502 ausgegeben wird. Danach wird mit dem nächsten Zeichenpaar (A5, B5) genauso verfahren. In dieser Weise wird das Ausgeben fortgesetzt, bis alle 16 Zeichen der ersten beiden Teilzeichenketten der ersten Zeichenkette ausgegeben wurden.

Synchron zum Ausgeben der Zeichen durch die SPI-Schnittstellen 406, 407 werden die Zeichen von der SPI-Schnittstelle 104 über deren MOSI-Anschluss und MISO-Anschluss empfangen. Dabei wird der MISO-Anschluss entgegen seiner ursprünglichen Bestimmung als Eingang verwendet. Während der Übertragung wird das Empfangsregister (nicht gezeigt) der SPI-Schnittstelle 104 schrittweise mit Zeichen gefüllt. Ferner werden die empfangenen Zeichen aus dem Empfangsregister in die Speichereinheit 103 (vgl. Figur 4) übertragen und dort gespeichert.

Es wird nun wieder auf Figur 6 Bezug genommen.

Sobald die erste Teilzeichenkette und die zweite Teilzeichenkette aus den Senderegistern 601, 602 ausgegeben wurden, werden die SPI-DMA-Sendeereignisse 604, 605 erneut ausgelöst.

Das führt dazu, dass die Speicherdirektzugriffs-Steuereinheit 408 die dritte Teilzeichenkette der ersten Zeichenkette aus der Speichereinheit 409 in das Senderegister 601 überträgt (DMA-Transfer 612). Außerdem überträgt die Speicherdirektzugriffs-Steuereinheit 408 die vierte Teilzeichenkette der ersten Zeichenkette aus der Speichereinheit 409 in das Senderegister 602 (DMA-Transfer 613).

Sobald die dritte Teilzeichenkette und die vierte Teilzeichenkette in den Senderegistern 601, 602 vorliegen, werden die beiden Teilzeichenketten aus den SPI-Schnittstellen 406, 407 über die SPI-Schnittstelle 104 (vgl. Figur 5) in die Speichereinheit 103 (vgl. Figur 4) übertragen. Dabei wird genauso wie beim Übertragen der ersten Teilzeichenkette und der zweiten Teilzeichenkette in die Speichereinheit 103 vorgegangen.

Damit ist das Speichern der zweiten Zeichenkette in der Speichereinheit 103 (vgl. Figur 4) beendet.

Es wird nun wieder auf Figur 4 Bezug genommen.

Bei einem anderen Ausführungsbeispiel der Erfindung werden weitere Teilzeichenketten aus der Speichereinheit 409 des elektronischen Moduls 402 in die Speichereinheit 103 des elektronischen Moduls 101 übertragen. Dabei wird genauso vorgegangen, wie bei den vorgenannten Teilzeichenketten eins bis vier. Auf diese Weise kann beispielsweise das Abbild eines Betriebssystems von dem ersten elektronischen Modul 101 in das zweite elektronische Modul 102 übertragen werden.

Anschließend wird die SPI-Schnittstelle 104 deaktiviert, indem die SPI-Schnittstelle 406 den Spannungspegel ihres Chipauswahlanschlusses (CS) (vgl. Figur 5) auf das hohe Niveau erhöht. Das bewirkt auch ein Umschalten der SPI-Schnittstelle 104 vom Zweifachschreib-Betriebmodus in den Einfachlese/Einfachschreib-Betriebsmodus. Zusätzlich wird die SPI-Schnittstelle 407 deaktiviert, indem der Hauptprozessor den Spannungspegel des Allzweckeingabe/-ausgabe-Anschlusses 507 (vgl. Figur 5) auf das hohe Niveau erhöht.

Zusammenfassend werden bei dieser Variante des Speicherns der zweiten Zeichenkette in der Speichereinheit 103 die Zeichen über mehrere Datenleitungen 502, 503 (vgl. Figur 5) parallel in das elektronische Modul 101 übertragen, was im Vergleich zum Übertragen über nur eine Datenleitung eine höhere Datenübertragungsgeschwindigkeit erlaubt. Ein weiterer Vorteil dieser Variante besteht darin, dass die zweite Zeichenkette unter Verwendung der Schaltungsanordnung 400 aus der ersten Zeichenkette generiert wird, was ein externes Generieren der zweiten Zeichenkette, beispielsweise in einer separaten Recheneinheit, überflüssig macht.

**Patentansprüche**

1. Schaltungsanordnung (100) zum Übertragen von Daten aus einer ersten Speichereinheit (103) in eine zweite Speichereinheit (109),
   mit einem ersten elektronischen Modul (101), welches

   - eine erste Speichereinheit (103), die als Flash-EEPROM, EPROM oder MROM ausgebildet ist, und
   - eine zumindest zweifachlesefähige SPI-Schnittstelle (104) aufweist, und

   einem zweiten elektronischen Modul (102), welches

   - eine zweite Speichereinheit (109), die als SDRAM-Speicherbank, SRAM oder DRAM ausgebildet ist,
   - eine erste einfachschreibfähige SPI-Schnittstelle (106) mit einem ersten Empfangsregister (301) und einer einzelnen Datenleitung (202) sowie eine zweite einfachschreibfähige SPI-Schnittstelle (107) mit einem zweiten Empfangsregister (303) und einer einzelnen Datenleitung (205), die ausgebildet sind, in der ersten Speichereinheit (103) gespeicherte Daten von der zumindest zweifachlesefähigen SPI-Schnittstelle (104) parallel über die beiden jeweils einzelnen Datenleitungen (202, 205) zu empfangen und in das erste Empfangsregister (301) bzw. das zweite Empfangsregister (303) zu übertragen, und
   - eine Speicherdirektzugriffs-Steuereinheit (108), die ausgebildet ist, eine in dem ersten Empfangsregister (301) empfangene erste Teilzeichenkette mit mehreren Zeichen und eine in dem zweiten Empfangsregister (303) parallel empfangene zweite Teilzeichenkette mit mehreren Zeichen in die zweite Speichereinheit (109) durch jeweils einen DMA-Transfer zu übertragen, so dass die zwei empfangenen Teilzeichenketten direkt hintereinander in der zweiten Speichereinheit (109) gespeichert werden, aufweist.

**2.** Verfahren zum Übertragen von Daten aus einer ersten Speichereinheit (103) in eine zweite Speichereinheit (109) unter Verwendung einer Schaltungsanordnung (100)
mit einem ersten elektronischen Modul (101), welches

- eine erste Speichereinheit (103), die als Flash-EEPROM, EPROM oder MROM ausgebildet ist, und
- eine zumindest zweifachlesefähige SPI-Schnittstelle (104) aufweist, und

einem zweiten elektronischen Modul (102), welches

- eine zweite Speichereinheit (109), die als SDRAM-Speicherbank, SRAM oder DRAM ausgebildet ist,
- eine erste einfachschreibfähige SPI-Schnittstelle (106) mit einem ersten Empfangsregister (301) und einer einzelnen Datenleitung (202),
- eine zweite einfachschreibfähige SPI-Schnittstelle (107) mit einem zweiten Empfangsregister (303) und einer einzelnen Datenleitung (205) und
- eine Speicherdirektzugriffs-Steuereinheit (108) aufweist,

wobei mittels der ersten einfachschreibfähigen SPI-Schnittstelle (106) und der zweiten einfachschreibfähigen SPI-Schnittstelle (107) in der ersten Speichereinheit (103) gespeicherte Daten von der zumindest zweifachlesefähigen SPI-Schnittstelle (104) parallel über die beiden jeweils einzelnen Datenleitungen (202, 205) empfangen und in das erste Empfangsregister (301) bzw. das zweite Empfangsregister (303) übertragen werden und
mittels der Speicherdirektzugriffs-Steuereinheit (108) eine in dem ersten Empfangsregister (301) empfangene erste Teilzeichenkette mit mehreren Zeichen und eine in dem zweiten Empfangsregister (303) parallel empfangene zweite Teilzeichenkette mit mehreren Zeichen in die zweite Speichereinheit (109) durch jeweils einen DMA-Transfer übertragen werden, so dass die zwei empfangenen Teilzeichenketten direkt hintereinander in der zweiten Speichereinheit (109) gespeichert werden.

**3.** Verfahren gemäß Anspruch 2,
bei dem beim Übertragen der in der ersten Speichereinheit (103) gespeicherten Daten in das erste Empfangsregister (301) bzw. das zweite Empfangsregister (303) eine der beiden einfachschreibfähigen SPI-Schnittstellen (106, 107) als Master-SPI-Schnittstelle fungiert, während die andere der beiden einfachschreibfähigen SPI-Schnittstellen (106, 107) als Slave-SPI-Schnittstelle fungiert.

**4.** Verfahren gemäß einem der Ansprüche 2 und 3,
bei dem beim Übertragen der in der ersten Speichereinheit (103) gespeicherten Daten in das erste Empfangsregister (301) bzw. das zweite Empfangsregister (303) die zumindest zweifachlesefähige SPI-Schnittstelle (104) in einem Mehrfachlese-Betriebsmodus betrieben wird.

**5.** Schaltungsanordnung (400) zum Übertragen von Daten aus einer zweiten Speichereinheit (409) in eine erste Speichereinheit (103),
mit einem ersten elektronischen Modul (101), welches

- die erste Speichereinheit (103), die als Flash-EEPROM, EPROM oder MROM ausgebildet ist, und
- eine zumindest zweifachschreibfähige SPI-Schnittstelle (104) aufweist, und

einem zweiten elektronischen Modul (402), welches

- eine zweite Speichereinheit (409), die als SDRAM-Speicherbank, SRAM oder DRAM ausgebildet ist,
- eine erste einfachlesefähige SPI-Schnittstelle (406) mit einem ersten Senderegister (601) und einer einzelnen Datenleitung (503) sowie eine zweite einfachlesefähige SPI-Schnittstelle (407) mit einem zweiten Senderegister (602) und einer einzelnen Datenleitung (502), die ausgebildet sind, eine im ersten Senderegister (601) gespeicherte Teilzeichenkette mit mehreren Zeichen und eine im zweiten Senderegister (602) gespeicherte Teilzeichenkette mit mehreren Zeichen parallel über die beiden jeweils einzelnen Datenleitungen (502, 503) über die zumindest zweifachschreibfähige SPI-Schnittstelle (104) in die erste Speichereinheit (103) zu übertragen, und
- eine Speicherdirektzugriffs-Steuereinheit (408), die ausgebildet ist, in der zweiten Speichereinheit (409) gespeicherte, zwei aufeinanderfolgende erste und zweite Teilzeichenketten durch jeweils einen DMA-Transfer in das erste Senderegister (601) bzw. das zweite Senderegister (602) zu übertragen, aufweist.

**6.** Verfahren zum Übertragen von Daten aus einer zweiten Speichereinheit (409) in eine erste Speichereinheit (103) unter Verwendung einer Schaltungsanordnung (400)
mit einem ersten elektronischen Modul (101), welches

- eine erste Speichereinheit (103), die als Flash-EEPROM, EPROM oder MROM ausgebildet ist, und
- eine zumindest zweifachschreibfähige SPI-Schnittstelle (104) aufweist, und

einem zweiten elektronischen Modul (402), welches

- eine zweite Speichereinheit (409), die als SDRAM-Speicherbank, SRAM oder DRAM ausgebildet ist,
- eine erste einfachlesefähige SPI-Schnittstelle (406) mit einem ersten Senderegister (601) und einer einzelnen Datenleitung (503),
- eine zweite einfachlesefähige SPI-Schnittstelle (407) mit einem zweiten Senderegister (602) und einer einzelnen Datenleitung (502) und
- eine Speicherdirektzugriffs-Steuereinheit (408) aufweist,

wobei mittels der ersten einfachlesefähigen SPI-Schnittstelle (406) und der zweiten einfachlesefähigen SPI-Schnittstelle (407) eine im ersten Senderegister (601) gespeicherte Teilzeichenkette mit mehreren Zeichen und eine im zweiten Senderegister (602) gespeicherte Teilzeichenkette mit mehreren Zeichen parallel über die beiden jeweils einzelnen Datenleitungen (502, 503) über die zumindest zweifachschreibfähige SPI-Schnittstelle (104) in die erste Speichereinheit (103) übertragen werden und mittels der Speicherdirektzugriffs-Steuereinheit (408) in der zweiten Speichereinheit (409) gespeicherte, zwei aufeinanderfolgende erste und zweite Teilzeichenketten durch jeweils einen DMA-Transfer in das erste Senderegister (601) bzw. das zweite Senderegister (602) übertragen werden.

7. Verfahren gemäß Anspruch 6,
bei dem beim Übertragen der im ersten Senderegister (601) gespeicherten Teilzeichenkette und der im zweiten Senderegister (602) gespeicherten Teilzeichenkette in die erste Speichereinheit (103) eine der beiden einfachlesefähigen SPI-Schnittstellen (406, 407) als Master-SPI-Schnittstelle fungiert, während die andere der beiden einfachlesefähigen SPI-Schnittstellen (406, 407) und die zumindest zweifachschreibfähige SPI-Schnittstelle (104) als Slave-SPI-Schnittstelle fungieren.

8. Verfahren gemäß einem der Ansprüche 6 und 7,
bei dem beim Übertragen der im ersten Senderegister (601) gespeicherten Teilzeichenkette und der im zweiten Senderegister (602) gespeicherten Teilzeichenkette in die erste Speichereinheit (103) die zumindest zweifachschreibfähige SPI-Schnittstelle (104) in einem Mehrfachschreib-Betriebsmodus betrieben wird.

9. Verfahren gemäß einem der Ansprüche 6 bis 8,
welches bei der Herstellung des ersten elektronischen Moduls (101), beim Test des ersten elektronischen Moduls (101) oder bei der Herstellung eines eingebetteten Systems, zu dem das erste elektronische Modul (101) gehört, ausgeführt wird.

## Claims

1. Circuit arrangement (100) for transmitting data out of a first memory unit (103) into a second memory unit (109), including a first electronic module (101) which comprises

- a first memory unit (103) designed as Flash-EEPROM, EPROM, or MROM, and
- an at least dual-read capable SPI interface (104), and

a second electronic module (102) which comprises

- a second memory unit (109) designed as SDRAM memory bank, SRAM, or DRAM,
- a first single-write capable SPI interface (106) with a first receive register (301) and a single data line (202) as well as a second single-write capable SPI interface (107) with a second receive register (303) and a single data line (205) which are designed for receiving data stored in the first memory unit (103) from the at least dual-read capable SPI interface (104) in parallel via the two always single data lines (202, 205) and transmitting the data into the first receive register (301) and the second receive register (303) respectively, and

- a direct memory access control unit (108) designed for transmitting a first partial character string with multiple characters received in the first receive register (301) and a second partial character string with multiple characters received in the second receive register (303) in parallel each by a DMA transfer into the second memory unit (109) so that the two received partial character strings are stored in the second memory unit (109) directly one behind the other.

2. Method for transmitting data out of a first memory unit (103) into a second memory unit (109) by using a circuit arrangement (100)
including a first electronic module (101) which comprises

- a first memory unit (103) designed as Flash-EEPROM, EPROM, or MROM, and
- an at least dual-read capable SPI interface (104), and

a second electronic module (102) which comprises

- a second memory unit (109) designed as SDRAM memory bank, SRAM, or DRAM,
- a first single-write capable SPI interface (106) with a first receive register (301) and a single data line (202),
- a second single-write capable SPI interface (107) with a second receive register (303) and a single data line (205), and
- a direct memory access control unit (108),

wherein by using the first single-write capable SPI interface (106) and the second single-write capable SPI interface (107) data stored in the first memory unit (103) are received from the at least dual-read capable SPI interface (104) in parallel via the two always single data lines (202, 205) and transmitted into the first receive register (301) and the second receive register (303) respectively and
by using the direct memory access control unit (108) a first partial character string with multiple characters received in the first receive register (301) and a second partial character string with multiple characters received in parallel in the second receive register (303) are transmitted each by a DMA transfer into the second memory unit (109) so that the two received partial character strings are stored in the second memory unit (109) directly one behind the other.

3. Method according to claim 2
wherein transmitting the data stored in the first memory unit (103) into the first receive register (301) and the second receive register (303) respectively one of the two single-write capable SPI interfaces (106, 107) functions as master SPI interface while the other of the two single-write capable SPI interfaces (106, 107) functions as slave SPI interface.

4. Method according to one of the claims 2 and 3
wherein transmitting the data stored in the first memory unit (103) into the first receive register (301) and the second receive register (303) respectively the at least dual-read capable SPI interface (104) is operated in a multi-read operation mode.

5. Circuit arrangement (400) for transmitting data out of a second memory unit (409) into a first memory unit (103), including a first electronic module (101) which comprises

- the first memory unit (103) designed as Flash-EEPROM, EPROM, or MROM, and
- an at least dual-write capable SPI interface (104), and

a second electronic module (402) which comprises

- a second memory unit (409) designed as SDRAM memory bank, SRAM, or DRAM,
- a first single-read capable SPI interface (406) with a first transmit register (601) and a single data line (503) as well as a second single-read capable SPI interface (407) with a second transmit register (602) and a single data line (502) which are designed for transmitting a partial character string with multiple characters stored in the first transmit register (601) and a partial character string with multiple characters stored in the second transmit register (602) in parallel via the two always single data lines (502, 503) via the at least dual-write capable SPI-interface (104) into the first memory unit (103), and
- a direct memory access control unit (408) designed for transmitting two successive first and second partial character strings stored in the second memory unit (409) each by a DMA transfer into the first transmit register (601) and the second transmit register (602) respectively.

**6.** Method for transmitting data out of a second memory unit (409) into a first memory unit (103) by using a circuit arrangement (400)
including a first electronic module (101) which comprises

- a first memory unit (103) designed as Flash-EEPROM, EPROM, or MROM, and
- an at least dual-write capable SPI interface (104), and

a second electronic module (402) which comprises

- a second memory unit (409) designed as SDRAM memory bank, SRAM, or DRAM,
- a first single-read capable SPI interface (406) with a first transmit register (601) and a single data line (503),
- a second single-read capable SPI interface (407) with a second transmit register (602) and a single data line (502), and
- a direct memory access control unit (408),

wherein by using the first single-read capable SPI interface (406) and the second single-read capable SPI interface (407) a partial character string with multiple characters stored in the first transmit register (601) and a partial character string with multiple characters stored in the second transmit register (602) are transmitted in parallel via the two always single data lines (502, 503) via the at least dual-write capable SPI-interface (104) into the first memory unit (103) and
by using the direct memory access control unit (408) two successive first and second partial character strings stored in the second memory unit (409) are transmitted each by a DMA transfer into the first transmit register (601) and the second transmit register (602) respectively.

**7.** Method according to claim 6
wherein transmitting the partial character string stored in the first transmit register (601) and the partial character string stored in the second transmit register (602) into the first memory unit (103) one of the two single-read capable SPI interfaces (406, 407) functions as master SPI interface while the other of the two single-read capable SPI interfaces (406, 407) and the at least dual-write capable SPI interface (104) function as slave SPI interface.

**8.** Method according to one of the claims 6 and 7
wherein transmitting the partial character string stored in the first transmit register (601) and the partial character string stored in the second transmit register (602) into the first memory unit (103) the at least dual-write capable SPI interface (104) is operated in a multi-write operation mode.

**9.** Method according to one of the claims 6 to 8
which is performed during the manufacture of the first electronic module (101), during test of the first electronic module (101), or during the manufacture of an embedded system to which the first electronic module (101) belongs.

**Revendications**

**1.** Montage (100) permettant de transférer des données d'une première unité mémoire (103) dans une deuxième unité mémoire (109),
avec un premier module électronique (101), qui possède

- une première unité mémoire (103) configurée comme Flash-EEPROM, EPROM ou MROM
et
- une interface SPI (104) permettant au moins un double accès en lecture, et

un deuxième module électronique (102), qui possède

- une deuxième unité mémoire (109) configurée comme banque de mémoire SDRAM, SRAM ou DRAM,
- une première interface SPI (106) permettant un accès simple en écriture, avec un premier
registre de réception (301) et une ligne de données individuelle (202), ainsi qu'une deuxième interface SPI (107) permettant un accès simple en écriture, avec un deuxième registre de réception (303) et une ligne de données individuelle (205), configurés de manière à recevoir des données enregistrées dans la première unité mémoire (103) depuis l'interface SPI (104) permettant au moins un double accès en lecture, en parallèle par les deux lignes de données individuelles (202, 205), et à les transférer respectivement dans le premier registre de réception (301) et dans le deuxième registre de réception (303), et

- une unité de commande à accès mémoire direct (108) configurée de manière à transférer une première chaîne partielle de plusieurs caractères, reçue dans le premier registre de réception (301), et une deuxième chaîne partielle de plusieurs caractères, reçue en parallèle dans le deuxième registre de réception (303), dans la deuxième unité mémoire (109), respectivement par un transfert DMA, de sorte que les deux chaînes de caractères partielles reçues soient enregistrées directement l'une à la suite de l'autre dans la deuxième unité mémoire (109).

2. Procédé permettant de transférer des données d'une première unité mémoire (103) dans une deuxième unité mémoire (109) en utilisant un montage (100)
avec un premier module électronique (101), qui possède

- une première unité mémoire (103) configurée comme Flash-EEPROM, EPROM ou MROM

et

- une interface SPI (104) permettant au moins un double accès en lecture, et

un deuxième module électronique (102), qui possède

- une deuxième unité mémoire (109) configurée comme banque de mémoire SDRAM, SRAM ou DRAM,
- une première interface SPI (106) permettant un accès simple en écriture, avec un premier registre de réception (301) et une ligne de données individuelle (202),
- une deuxième interface SPI (107) permettant un accès simple en écriture, avec un deuxième

registre de réception (303) et une ligne de données individuelle (205), et

- une unité de commande à accès mémoire direct (108),

des données enregistrées dans la première unité mémoire (103) étant reçues par la première interface SPI (106) permettant un accès simple en écriture et par la deuxième interface SPI (107) permettant un accès simple en écriture depuis l'interface SPI (104) permettant au moins un double accès en lecture, en parallèle par les deux lignes de données individuelles (202, 205), et transférées respectivement dans le premier registre de réception (301) et dans le deuxième registre de réception (303), et

l'unité de commande à accès mémoire direct (108) étant utilisée pour transférer une première chaîne partielle de plusieurs caractères, reçue dans le premier registre de réception (301), et une deuxième chaîne partielle de plusieurs caractères, reçue en parallèle dans le deuxième registre de réception (303), dans la deuxième unité mémoire (109), respectivement par un transfert DMA, de sorte que les deux chaînes de caractères partielles reçues soient enregistrées directement l'une à la suite de l'autre dans la deuxième unité mémoire (109).

3. Procédé selon la revendication 2,
**caractérisé en ce que**, pendant que les données enregistrées dans la première unité mémoire (103) sont transférées respectivement dans le premier registre de réception (301) et dans le deuxième registre de réception (303), l'une des deux interfaces SPI (106, 107) permettant un accès simple en écriture remplit la fonction d'interface SPI maître, tandis que l'autre des deux interfaces SPI (106, 107) permettant un accès simple en écriture remplit la fonction d'interface SPI esclave.

4. Procédé selon l'une des revendications 2 et 3,
**caractérisé en ce que**, pendant que les données enregistrées dans la première unité mémoire (103) sont transférées respectivement dans le premier registre de réception (301) et dans le deuxième registre de réception (303), l'interface SPI (104) permettant au moins un double accès en lecture est utilisée dans un mode de lecture multiple.

5. Montage (400) permettant de transférer des données d'une deuxième unité mémoire (409) dans une première unité mémoire (103),
avec un premier module électronique (101), qui possède

- une première unité mémoire (103) configurée comme Flash-EEPROM, EPROM ou MROM

et
- une interface SPI (104) permettant au moins un double accès en écriture, et

un deuxième module électronique (402), qui possède

- une deuxième unité mémoire (409) configurée comme banque de mémoire SDRAM, SRAM ou DRAM,
- une première interface SPI (406) permettant un accès simple en lecture, avec un premier registre d'émission (601) et une ligne de données individuelle (503), ainsi qu'une deuxième interface SPI (407) permettant un accès simple en lecture, avec un deuxième registre d'émission (602) et une ligne de données individuelle (502), configurés de manière à recevoir une chaîne partielle de plusieurs caractères enregistrée dans le premier registre d'émission (601) et une chaîne partielle de plusieurs caractères enregistrée dans le deuxième registre d'émission (602), en parallèle par les deux lignes de données individuelles (502, 503) et par l'interface SPI (104) permettant au moins un double accès en écriture, dans la première unité mémoire (103), et
- une unité de commande à accès mémoire direct (408) configurée de manière à transférer

deux chaînes de caractères partielles, enregistrées successivement dans la deuxième unité mémoire (409), respectivement dans le premier registre d'émission (601) et dans le deuxième registre d'émission (602) par un transfert DMA.

6. Procédé permettant de transférer des données d'une deuxième unité mémoire (409) dans une première unité mémoire (103) en utilisant un montage (400)
avec un premier module électronique (101), qui possède

- une première unité mémoire (103) configurée comme Flash-EEPROM, EPROM ou MROM

et

- une interface SPI (104) permettant au moins un double accès en écriture, et

un deuxième module électronique (402), qui possède

- une deuxième unité mémoire (409) configurée comme banque de mémoire SDRAM, SRAM ou DRAM,
- une première interface SPI (406) permettant un accès simple en lecture, avec un premier registre d'émission (601) et une ligne de données individuelle (503),
- une deuxième interface SPI (407) permettant un accès simple en lecture, avec un deuxième registre d'émission (602) et une ligne de données individuelle (502), et
- une unité de commande à accès mémoire direct (408),

une chaîne partielle de plusieurs caractères enregistrée dans le premier registre d'émission (601) et une chaîne partielle de plusieurs caractères enregistrée dans le deuxième registre d'émission (602) étant transférées dans la première unité mémoire (103) par la première interface SPI (406) permettant un accès simple en lecture et par la deuxième interface SPI (407) permettant un accès simple en lecture, en parallèle par les deux lignes de données individuelles (502, 503) et par l'interface SPI (104) permettant au moins un double accès en écriture, et l'unité de commande à accès mémoire direct (408) étant utilisée pour transférer deux chaînes de caractères partielles, enregistrées successivement dans la deuxième unité mémoire (409), respectivement dans le premier registre d'émission (601) et dans le deuxième registre d'émission (602) par un transfert DMA.

7. Procédé selon la revendication 6,
**caractérisé en ce que**, pendant que la chaîne de caractères partielle enregistrée dans le premier registre d'émission (601) et la chaîne de caractères partielle enregistrée dans le deuxième registre d'émission (602) sont transférées dans la première unité mémoire (103), l'une des deux interfaces SPI (406, 407) permettant un accès simple en lecture remplit la fonction d'interface SPI maître, tandis que l'autre des deux interfaces SPI (406, 407) permettant un accès simple en lecture et l'interface SPI (104) permettant au moins un double accès en écriture remplissent la fonction d'interface SPI esclave.

8. Procédé selon l'une des revendications 6 et 7,
**caractérisé en ce que**, pendant que la chaîne de caractères partielle enregistrée dans le premier registre d'émission (601) et la chaîne de caractères partielle enregistrée dans le deuxième registre d'émission (602) sont transférées dans la première unité mémoire (103), l'interface SPI (104) permettant au moins un double accès en écriture est utilisée dans un mode d'écriture multiple.

9. Procédé selon l'une des revendications 6 à 8, appliqué lors de la fabrication du premier module électronique (101), lors du test du premier module électronique (101) ou lors de la fabrication d'un système intégré dont fait partie le premier module électronique (101).

FIG 1

FIG 2

FIG 3

RAM 109

| 1. TZK | 2. TZK | 3. TZK | 4. TZK |

307

312

310

313

311

102

**304**
Quelladresse: 0x4803013C
Zieladresse: 0x80000000
Quelladressinkrement: 0
Zieladressinkrement: 2
SPI-DMA-Empfangsereignis

**306**
Quelladresse: beliebig
Zieladresse: 0x48030138
Quelladressinkrement: 0
Zieladressinkrement: 0
SPI-DMA-Sendeereignis

**305**
Quelladresse: 0x4803013C
Zieladresse: 0x80000001
Quelladressinkrement: 0
Zieladressinkrement: 2
SPI-DMA-Empfangsereignis

108

SPI0 106
301 Empfangsregister
302 Senderegister
312  310  308  307

SPI1 107
303 Empfangsregister
311  313  309

22

FIG 4

FIG 5

FIG 6

Erzeugen einer zweiten Zeichenkette und Speichern der zweiten Zeichenkette in der ersten Speichereinheit | 710

Übertragen der Zeichen aus der ersten Speichereinheit in die SPI-Schnittstellen des zweiten elektronischen Moduls | 720

SPI-Schnittstelle 104 aktivieren und in Zweifachlese-Betriebsmodus umschalten | 721

SPI-DMA-Empfangsereignisse einrichten | 722

SPI-DMA-Sendeereignis einrichten | 723

SPI-Schnittstelle 107 aktivieren Empfangsfunktionen der SPI-Schnittstellen 106, 107 aktivieren | 724

Sendefunktion der SPI-Schnittstelle 106 aktivieren | 725

Übertragen der Zeichen aus den SPI-Schnittstellen des zweiten elektronischen Moduls in die zweite Speichereinheit | 730

FIG 7